# EUROPÄISCHE PATENTSCHRIFT

(11) **EP 4 005 774 B1**
(45) Veröffentlichungstag und Bekanntmachung des Hinweises auf die Patenterteilung: **12.06.2024**
(21) Anmeldenummer: 21202141.4
(22) Anmeldetag: 12.10.2021
(51) Int. Cl.: B29C 63/02, B27D 5/00

(54) **VORRICHTUNG ZUR BESCHICHTUNG EINER OBERFLÄCHE**
DEVICE FOR COATING A SURFACE
DISPOSITIF DE REVÊTEMENT D'UNE SURFACE

(30) Priorität: 26.11.2020 AT 510352020
(43) Veröffentlichungstag der Anmeldung: 01.06.2022
(73) Patentinhaber: Felder KG, 6060 Hall (AT)
(72) Erfinder: FELDER, Johann, 6060 Hall (AT)
(74) Vertreter: Torggler & Hofmann Patentanwälte - Innsbruck

(56) Entgegenhaltungen:
- WO-A1-2015/140063
- DE-A1- 19 955 575

## Beschreibung

Die vorliegende Erfindung betrifft eine Vorrichtung zur Beschichtung einer Oberfläche, vorzugsweise einer Schmalfläche, eines, vorzugsweise platten- oder leistenförmigen, Werkstückes mit einem, vorzugsweise streifenförmigen, Deckmaterial mit den Merkmalen des Oberbegriffes des Anspruchs 1 sowie ein Verfahren zur Beschichtung einer Oberfläche mittels einer solchen Vorrichtung.

Entsprechende Vorrichtungen umfassen
- wenigstens eine Aktivierungsvorrichtung zur Aktivierung, vorzugsweise Erwärmung, der zu beschichtenden Oberfläche und
- wenigstens eine Fördervorrichtung, vorzugsweise wenigstens eine Förderrolle aufweist, welche dazu ausgebildet ist, eine Relativbewegung des Werkstückes zur Aktivierungsvorrichtung herbeizuführen, vorzugsweise wobei das Werkstück mit der zu beschichtenden Oberfläche mittels der wenigstens einen Fördervorrichtung an der wenigstens einen Aktivierungsvorrichtung vorbeiführbar ist.

Entsprechende Vorrichtungen zur Beschichtung einer Oberfläche sind beispielsweise aus der DE 199 55 575 A1 bekannt.

Hierbei wird ein Werkstück relativ zur Vorrichtung mittels einer Fördervorrichtung bewegt, wobei das Werkstück zunächst mit der zu beschichtenden Oberfläche an einer Aktivierungsvorrichtung - genauer gesagt: an einer Heizvorrichtung - vorbeigeführt wird. Mittels dieser Aktivierungsvorrichtung wird die zu beschichtende Oberfläche erhitzt, um einen dort gegebenenfalls bereits aufgetragenen Haftvermittler zu aktivieren oder die Oberfläche für einen anschließenden Fügeprozess auf Temperatur zu bringen.

Eine weitere Vorrichtung zur Beschichtung einer Oberfläche ist durch die WO 2015/140063 A1 offenbart.

Es ist aber auch aus dem Stand der Technik bekannt, dass durch solche Aktivierungsvorrichtungen beispielsweise ein Haftvermittler oder ein Klebestoff auf die zu beschichtende Oberfläche aufgebracht, beispielsweise durch aufsprühen, wird.

Es kann jedoch auch vorgesehen sein, dass durch die Aktivierungsvorrichtung ein Stoff aufgebracht wird, welcher einen bereits am Werkstück vorhandenen Stoff aktiviert (beispielsweise Zwei-Komponenten-Kleber).

Nach Aktivierung der zu beschichtenden Oberfläche wird das Werkstück durch die Fördervorrichtung an eine Beschichtungsstation weitergeführt, bei welcher ein Deckmaterial aufgebracht wird. Vor Aufbringen des Deckmaterials kann es auch vorgesehen sein, dass ein Klebestreifen zwischen der zu beschichtenden Oberfläche und dem Deckmaterial aufgebracht wird.

Nach dem Aufbringen des Deckmaterials ist es bekannt, das Werkstück mit dem aufgebrachten Deckmaterial an der zu beschichtenden Oberfläche an einer weiteren Aktivierungsvorrichtung vorbeizuführen, wobei beispielsweise eine weitere Erhitzung vorgenommen werden kann, um die Oberfläche mit dem Deckmaterial zu verschmelzen oder gegebenenfalls zwischen Deckmaterial und Oberfläche angeordnete Materialien, wie beispielsweise ein Klebestreifen oder einen Kleber, zu aktivieren.

Es ist auch bekannt, dass während der Beschichtung nach Aufbringen eines Klebestreifens und vor Anlegen des Deckmaterials eine weitere Aktivierungsvorrichtung (beispielsweise zur Erwärmung) vorgesehen ist.

Nachteilig an den bekannten Varianten des Standes der Technik ist jedoch, dass durch die Aktivierungsvorrichtung oder Aktivierungsvorrichtungen auch angrenzende Oberflächen zu der zu beschichtenden Oberfläche beeinflusst werden.

So sind zumeist die angrenzenden Oberflächen zur zu beschichtenden Oberfläche, (wie beispielsweise eine Stirnfläche oder eine Sichtfläche) bereits mit einem Deckmaterial beschichtet, wobei durch die Aktivierungsvorrichtung die bereits beschichtete Oberfläche in Mitleidenschaft gezogen wird, in ihrer Funktionalität und/oder in ihrem optischen Erscheinungsbild geschädigt wird.

So ist beispielsweise auf eine mit einem Kunststoff beschichtete Oberfläche zu verweisen, welche durch eine als Heizstrahler ausgebildete Aktivierungsvorrichtung aufgeschmolzen wird und somit beschädigt wird.

Besonders in Bereichen, in welchen die angrenzenden Oberflächen in die zu beschichtende Oberfläche übergehen (an den Übergangskanten), werden die angrenzenden Oberflächen durch die über die Aktivierungsvorrichtung abgegebene Wärmeenergie intensiv in Mitleidenschaft gezogen. Diese Bereiche sind im Weiteren als Stirnbereiche der angrenzenden Oberflächen an die zu beschichtende Oberfläche bezeichnet.

In diesen Stirnbereichen der angrenzenden Oberflächen liegen Deckschichten (oder auch Beschichtungen genannt), welche an den angrenzenden Oberflächen angeordnet sind, mit ihrem gesamten Querschnitt (besonders wenn die zu beschichtende Oberfläche im Wesentlichen senkrecht zu der angrenzenden Oberfläche liegt) im Einwirkbereich der Aktivierungsvorrichtung, wodurch bereits geringere Wärmeenergiemengen ausreichen, um Beschädigungen an den angrenzenden Oberflächen hervorzurufen.

Zusammenfassend kann somit gesagt werden, dass in Stirnbereichen der angrenzenden Oberflächen an die zu beschichtende Oberfläche:
- einerseits eine höhere Wärmeenergie auf die angrenzenden Oberflächen einwirkt (durch den geringen Abstand der Aktivierungsvorrichtung) und
- andererseits die Wärmeenergie auf den gesamten Querschnitt der an der angrenzenden Oberfläche angeordneten Deckschicht einwirkt.

Aufgabe der vorliegenden Erfindung ist es, eine gegenüber dem Stand der Technik verbesserte Vorrichtung anzugeben, bei welcher die beschriebenen Nachteile zumindest teilweise behoben werden und/oder welche sich insbesondere durch eine verbesserte Qualität der Beschichtungsergebnisse auszeichnet und/oder welche ein schonenderes Beschichtungsverfahren für Werkstücke darstellt.

Dies wird erfindungsgemäß mit einer Vorrichtung zur Beschichtung einer Oberfläche mit den Merkmalen des Anspruchs 1 gelöst, sowie mit einem Verfahren zum Beschichten einer Oberfläche mit den Merkmalen des Anspruchs 15.

Erfindungsgemäß ist vorgesehen, dass wenigstens eine relativ zur wenigstens einen Aktivierungsvorrichtung bewegbare Abschirmvorrichtung vorgesehen ist, welche dazu ausgebildet ist, eine an die zu beschichtende Oberfläche angrenzende, vorzugsweise mit einem Deckmaterial beschichtete, Oberfläche, vorzugsweise eine Stirnfläche des Werkstücks und/oder ein Stirnbereich eines Deckmaterials, mit welcher die Oberfläche beschichtet ist, von der wenigstens einen Aktivierungsvorrichtung abzuschirmen, während das Werkstück die wenigstens eine Aktivierungsvorrichtung passiert oder umgekehrt.

Erfindungsgemäß kann es somit vorgesehen sein, dass durch die Abschirmvorrichtung eine an die zu beschichtende Oberfläche angrenzende Oberfläche abgeschirmt wird und somit nicht von der Aktivierungsvorrichtung beeinträchtigt wird oder beschädigt wird.

Besonders in Bezug auf den Stirnbereich der angrenzenden Oberfläche an die zu beschichtende Oberfläche kann durch die Abschirmvorrichtung gezielt der Einfluss der Aktivierungsvorrichtung auf die angrenzende Oberfläche verringert werden.

Eine solche Abschirmvorrichtung kann beispielsweise eine Oberfläche von thermischen Einflüssen oder auch vom Auftrag durch Materialien mittels der Aktivierungsvorrichtung schützen, indem sie die zu schützende Oberfläche beispielsweise abdeckt.

Eine solche Abschirmvorrichtung kann die angrenzende Oberfläche beispielsweise durch einen "Schattenwurf" abschirmen, indem die Abschirmvorrichtung zwischen der Aktivierungsvorrichtung und der angrenzenden Oberfläche angeordnet ist, wodurch durch die Aktivierungsvorrichtung ausgestrahlte Materialien oder Energie, vorzugsweise thermische Energie, von der Abschirmvorrichtung aufgenommen wird und die abzuschirmende angrenzende Oberfläche somit im "Schatten" der Abschirmvorrichtung steht.

Es kann jedoch auch vorgesehen sein, dass die Abschirmvorrichtung direkt an der angrenzenden Oberfläche angreift und somit die angrenzende Oberfläche abdeckt.

Vorzugsweise ist dabei die angrenzende Oberfläche mit einem Winkel zwischen 45° und 135°, vorzugsweise zwischen 80° und 100°, besonders bevorzugt mit einem Winkel von 90°, zur zu beschichtenden Oberfläche angeordnet.

Die mit einem Deckmaterial beschichtete angrenzende Oberfläche ist eine Oberfläche des Werkstückes, welche direkt an die zu beschichtende Oberfläche des Werkstücks anschließt.

Vorteilhafte Ausführungsformen der Erfindung sind anhand der abhängigen Ansprüche definiert.

Es kann vorgesehen sein, dass die wenigstens eine Fördervorrichtung, welche dazu ausgebildet ist, eine Relativbewegung des Werkstückes zur Aktivierungsvorrichtung herbeizuführen, wenigstens eine Förderrolle und/oder wenigstens einen Förderriemen aufweist.

Vorzugsweise kann vorgesehen sein, dass die wenigstens eine Abschirmvorrichtung im Wesentlichen mit derselben Relativgeschwindigkeit, in der das Werkstück relativ zur Aktivierungsvorrichtung bewegbar ist, relativ zur Aktivierungsvorrichtung bewegbar ist. Beispielsweise kann die Abschirmvorrichtung passiv von der Bewegung des Werkstücks relativ zur Aktivierungsvorrichtung bewegt werden oder aktiv angetrieben werden und an die Relativgeschwindigkeit des Werkstücks angepasst werden.

Es kann vorgesehen sein, dass wenigstens eine Kopplungsvorrichtung vorgesehen ist, mit welcher die wenigstens eine Abschirmvorrichtung zumindest während der Passage der wenigstens einen Aktivierungsvorrichtung mit dem Werkstück koppelbar ist und/oder wobei wenigstens ein Antrieb vorgesehen ist, mit welchem die wenigstens eine Abschirmvorrichtung relativ zur wenigstens einen Aktivierungsvorrichtung bewegbar ist.

Der wenigstens eine Antrieb kann beispielsweise pneumatisch, hydraulisch oder elektrisch ausgeführt sein.

Durch die wenigstens eine Kopplungsvorrichtung kann es vorgesehen sein, dass die wenigstens eine Abschirmvorrichtung passiv durch das Werkstück an der Aktivierungsvorrichtung vorbeigeschoben wird. Eine solche Kopplungsvorrichtung kann beispielsweise als Zwangsführung ausgebildet sein.

Vorzugsweise ist vorgesehen, dass die wenigstens eine Abschirmvorrichtung relativ zum Werkstück anhebbar oder absenkbar gelagert ist.

Durch eine anhebbare oder absenkbare Lagerung der Abschirmvorrichtung relativ zum Werkstück kann es beispielsweise vorgesehen sein, dass die Abschirmvorrichtung nur während der Passage des Werkstücks an der Aktivierungsvorrichtung eingreift, wobei kurz vor passieren des Werkstücks die wenigstens eine Abschirmvorrichtung angehoben oder abgesenkt wird, um eine angrenzende Oberfläche abzuschirmen, und nach der Passage des Werkstücks an der Aktivierungsvorrichtung die Abschirmvorrichtung wieder abgesenkt oder angehoben wird, um die angrenzende Oberfläche wieder freizugeben.

Es kann vorgesehen sein, dass wenigstens eine Rückführvorrichtung vorgesehen ist, mit welcher die wenigstens eine Abschirmvorrichtung in eine Ausgangsstellung rückführbar ist.

Durch das Vorsehen einer Rückführvorrichtung kann es vorgesehen sein, dass die Abschirmvorrichtung nicht an das Werkstück gebunden ist und somit zyklisch immer wiederkehrend eine Oberfläche eines weiteren Werkstücks gegenüber der Aktivierungsvorrichtung abschirmen kann, wobei die Abschirmvorrichtung nicht das Werkstück während des gesamten Durchlaufens der Vorrichtung zur Beschichtung begleitet.

Vorzugsweise kann vorgesehen sein, dass wenigstens zwei Abschirmvorrichtungen vorgesehen sind, mit denen
- die erste an die zu beschichtende Oberfläche angrenzende Oberfläche, vorzugsweise eine Stirnfläche des Werkstücks und/oder ein Stirnbereich eines Deckmaterials, mit welcher die Oberfläche beschichtet ist, und
- eine zweite von der ersten beschichteten Oberfläche beabstandete an die zu beschichtende Oberfläche angrenzende, vorzugsweisemit einem Deckmaterial beschichtete, Oberfläche, vorzugsweise eine weitere Stirnfläche des Werkstücks und/oder ein Stirnbereich eines Deckmaterials, mit welcher die Oberfläche beschichtet ist,
von der wenigstens einen Aktivierungsvorrichtung abschirmbar ist.

In anderen Worten ausgedrückt, kann es vorgesehen sein, dass wenigstens zwei Abschirmvorrichtungen vorgesehen sind, wobei, in Relativbewegung des Werkstückes gesehen, zuerst durch eine erste Abschirmvorrichtung eine vordere Stirnfläche des Werkstücks abgeschirmt wird und anschließend an die zu beschichtende Oberfläche eine nachfolgende, hintere Stirnfläche durch eine zweite Abschirmvorrichtung abgeschirmt wird.

Es kann vorgesehen sein, dass die wenigstens eine Aktivierungsvorrichtung eine Wärmequelle, besonders bevorzugt ein Infrarot-Strahler, Laser und/oder eine Heißluftquelle, umfasst. Jedoch sind auch andere thermische Aktivierungsvorrichtungen durchaus denkbar, welche beispielsweise durch Reibung Wärme zur Aktivierung der zu beschichtenden Oberfläche umsetzt.

Es kann vorgesehen sein, dass die wenigstens eine Abschirmvorrichtung eine, vorzugsweise pneumatische, Andrückvorrichtung aufweist, mittels welcher die Abschirmvorrichtung an die angrenzende Oberfläche andrückbar ist.

Es kann vorgesehen sein, dass die wenigstens eine Abschirmvorrichtung eine Führungsvorrichtung, vorzugsweise eine Linearführung, in Richtung der Relativbewegung zwischen dem Werkstück und der Aktivierungsvorrichtung aufweist, wobei vorzugsweise die Abschirmvorrichtung, besonders bevorzugt passiv, über die Relativbewegung des Werkstücks zu der Aktivierungsvorrichtung entlang der Führungsvorrichtung bewegbar ist.

Vorzugsweise ist vorgesehen, dass die Vorrichtung wenigstens eine Klebestreifen-Beschichtungsvorrichtung, mit welcher die Oberfläche mit wenigstens einem Klebestreifen vorbeschichtet werden kann, und wenigstens eine Deckmaterial-Beschichtungsvorrichtung, mit welche die mit dem wenigstens einen Klebestreifen vorbeschichtete Oberfläche mit dem Deckmaterial beschichtet werden kann, aufweist.

Es kann vorgesehen sein, dass die wenigstens eine Klebestreifen-Zuführvorrichtung
- wenigstens eine Trennvorrichtung zum Durchtrennen des Klebestreifens an einer Trennstelle umfasst, vorzugsweise wobei die wenigstens eine Trennvorrichtung ein relativ zu einem feststehenden Gegenmesser bewegbares Messer umfasst, und/oder
- wenigstens eine Führungs- und/oder Haltevorrichtung zum Führen und/oder Halten des Klebestreifens umfasst, vorzugsweise wobei die wenigstens eine Führungs- und/oder Haltevorrichtung dazu ausgebildet ist, einen noch auf die Oberfläche zu applizierenden Restabschnitt des wenigstens einen Klebestreifens zu führen oder zu halten.

Es kann vorgesehen sein, dass die Vorrichtung wenigstens eine Andruckrolle umfasst, mit welcher ein Deckmaterial und/oder wenigstens ein Klebestreifen an die Oberfläche andrückbar ist.

Vorzugsweise ist vorgesehen, dass wenigstens zwei Aktivierungsvorrichtungen vorgesehen sind, wobei vorzugsweise eine der beiden Aktivierungsvorrichtungen bezogen auf eine Durchlaufrichtung des Werkstücks vor wenigstens einer Andruckrolle und die andere der beiden Aktivierungsvorrichtungen bezogen auf die Durchlaufrichtung des Werkstücks hinter der wenigstens einen Andruckrolle angeordnet ist, wobei die vor der wenigstens einen Andruckrolle angeordnete Aktivierungsvorrichtung dazu ausgebildet ist, die unbeschichtete Oberfläche zu aktivieren und/oder die hinter der wenigstens einen Andruckrolle angeordnete Aktivierungsvorrichtung dazu ausgebildet ist, die mit dem wenigstens einen Klebestreifen vorbeschichtete Oberfläche zu aktivieren.

Im Hinblick auf ein erfindungsgemäßes Verfahren zur Beschichtung einer Oberfläche sind folgende Verfahrensschritte umfasst:
- Herbeiführen einer Relativbewegung zwischen dem Werkstück und wenigstens einer Aktivierungsvorrichtung, und
- Abschirmen einer an die zu beschichtende Oberfläche angrenzende, vorzugsweise mit einem Deckmaterial beschichtete, Oberfläche, vorzugsweise eine Stirnfläche des Werkstücks und/oder ein Stirnbereich eines Deckmaterials, mit welcher die Oberfläche beschichtet ist, von der wenigstens einen Aktivierungsvorrichtung während das Werkstück die wenigstens eine Aktivierungsvorrichtung passiert oder umgekehrt.

Weitere Einzelheiten und Vorteile der Erfindung werden anhand der Figurenbeschreibung unter Bezugnahme auf die Figuren im Folgenden näher erläutert.

Dabei zeigt:
- Fig. 1: einen Ausschnitt einer Vorrichtung zur Beschichtung einer Oberfläche eines Werkstücks mit einem Deckmaterial in einer schematisch dargestellten perspektivischen Ansicht,
- Fig. 2a - 2d: die Vorrichtung gemäß Fig. 1, wobei das Werkstück bei einem Durchlauf in unterschiedlichen Stellungen dargestellt ist, jeweils in schematischen Draufsichten,
- Fig. 3: einen vergrößerten Teilausschnitt, welcher die Klebestreifen-Zuführvorrichtung und das Werkstück kurz vor Beendigung der Vorbeschichtung der Werkstückoberfläche mit dem Klebestreifen in einer schematischen Draufsicht zeigt,
- Fig. 4a, 4b: im Wesentlichen den in der Fig. 3 dargestellten Teilausschnitt in schematisch dargestellten perspektivischen Ansichten, wobei unterschiedliche Teile der Klebestreifen-Zuführvorrichtung weggelassen wurden,
- Fig. 5: einen Ausschnitt einer Vorrichtung zur Abschirmung einer an die zu beschichtende Oberfläche angrenzende Oberfläche des Werkstücks in einer schematisch dargestellten perspektivischen Ansicht,
- Fig. 6: die Vorrichtung zur Abschirmung aus Fig. 5 in einer seitlichen Detailansicht, und
- Fig. 7a - 19b: die Vorrichtung gemäß Fig. 5, wobei das Werkstück bei einem Durchlauf in unterschiedlichen Stellungen dargestellt ist, jeweils in schematischen Frontalansicht und Draufsichten.

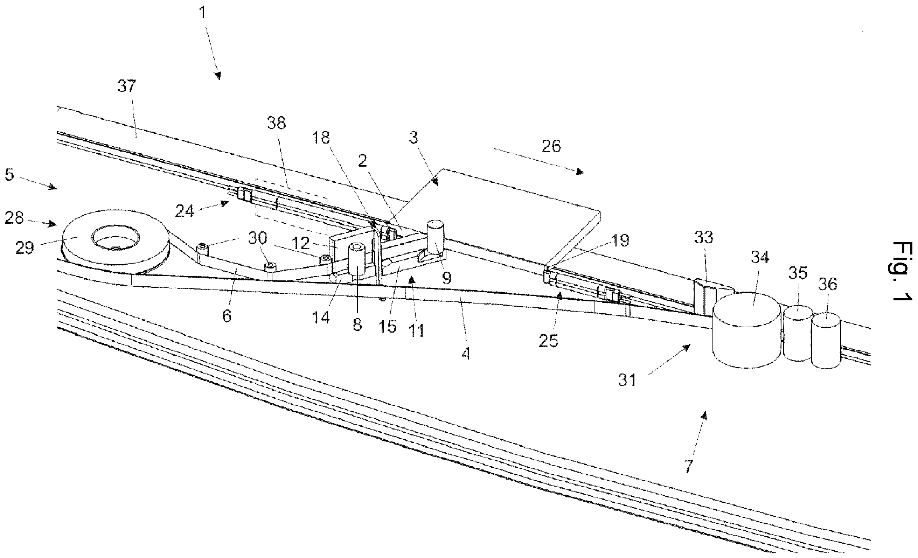

Die Figur 1 zeigt einen Ausschnitt einer Vorrichtung 1 zur Beschichtung einer Oberfläche 2, bei welcher es sich um eine Schmalfläche handelt, eines plattenförmigen Werkstücks 3 mit einem streifenförmigen Deckmaterial 4. Die Erfindung ist nicht auf die Beschichtung von Schmalflächen plattenförmiger Werkstücke 3 mit einem streifenförmigen Deckmaterial 4 beschränkt.

Die Vorrichtung 1 umfasst eine Klebestreifen-Beschichtungsvorrichtung 5, mit welcher die Werkstückoberfläche 2 mit wenigstens einem Klebestreifen 6 vorbeschichtet werden kann, und eine Deckmaterial-Beschichtungsvorrichtung 7, mit welcher die mit dem wenigstens einen Klebestreifen 6 vorbeschichtete Werkstückoberfläche 2 mit dem Deckmaterial 4 beschichtet werden kann.

Die Klebestreifen-Beschichtungsvorrichtung 5 umfasst eine Förderrolle 8, mit welcher der wenigstens eine Klebestreifen 6 in Richtung der Werkstückoberfläche 2 förderbar ist, und eine Andruckrolle 9, mit welcher der wenigstens eine Klebestreifen 6 erstmalig an die Werkstückoberfläche 2 drückbar ist.

Die Förderrolle 8 ist antreibbar. Beispielsweise kann sie, sobald die Vorrichtung 1 in Betrieb genommen wird, permanent angetrieben werden.

Bei dargestellten Ausführungsbeispiel ist die Förderrolle 8 relativ zum wenigstens einen Klebestreifen 6 lageverstellbar ausgebildet. Die Andruckrolle 9 ist relativ zum wenigstens einen Klebestreifen 6 und zur Werkstückoberfläche 2 lageverstellbar ausgebildet. Die Erfindung ist nicht auf dieses Ausführungsbeispiel beschränkt. Es kann z.B. auch nur eine der beiden Rollen 8, 9 lageverstellbar ausgebildet sein.

Die Klebestreifen-Beschichtungsvorrichtung 5 umfasst eine Klebestreifen-Zuführvorrichtung 11, mit welcher der wenigstens eine Klebestreifen 6 zur Werkstückoberfläche 2 führbar ist.

Die Klebestreifen-Zuführvorrichtung 11 umfasst eine Trennvorrichtung 18 zum Durchtrennen des Klebestreifens 6 an einer Trennstelle. Die Trennvorrichtung 18 kann wie im dargestellten Fall beispielsweise ein relativ zu einem feststehenden Gegenmesser bewegbares Messer 20 umfassen.

Es sind Aktivierungsvorrichtungen 24, 25 zur Aktivierung, vorzugsweise Erwärmung, der Werkstückoberfläche 2 und/oder des wenigstens einen Klebestreifens 6 vorgesehen. Die Aktivierungsvorrichtungen 24, 25 können beispielsweise einen Infrarot-Strahler umfassen. Dabei bietet es sich an, Strahler zu verwenden, welche elektromagnetische Strahlung im nahen Infrarotbereich emittieren.

Anstelle einer Aktivierung durch Erwärmen kann das Aktivieren alternativ oder ergänzend z.B. auch durch die Abgabe eines Wasserdampfs, eines druckbeaufschlagten Gases, einen Laser oder dergleichen erfolgen.

Beim dargestellten Ausführungsbeispiel sind konkret zwei Aktivierungsvorrichtungen 24, 25 vorgesehen, wobei eine der beiden Aktivierungsvorrichtungen 24, 25 bezogen auf eine Durchlaufrichtung 26 des Werkstücks 3 vor der Andruckrolle 9 und die andere der beiden Aktivierungsvorrichtungen 24, 25 bezogen auf die Durchlaufrichtung 26 des Werkstücks 3 hinter der Andruckrolle 9 angeordnet ist. Dabei ist die vor der Andruckrolle 9 angeordnete Aktivierungsvorrichtung 24 dazu ausgebildet, die unbeschichtete Werkstückoberfläche 2 zu aktivieren. Die hinter der Andruckrolle 9 angeordnete Aktivierungsvorrichtung 25 ist dazu ausgebildet, die mit dem wenigstens einen Klebestreifen 6 vorbeschichtete Werkstückoberfläche 2 zu aktivieren.

Eine oder beide Aktivierungsvorrichtungen 24, 25 können einen, im Falle der Aktivierungsvorrichtung 24 gestrichelt angedeuteten, Reflektor 38 umfassen.

Dadurch, dass die Klebestreifen-Zuführvorrichtung 11 eine Trennvorrichtung 18 zum Durchtrennen des Klebestreifens 6 umfasst, kann eine klare räumliche Trennung zwischen Aktivieren und Abtrennen des Klebestreifens 6 erzielt werden. Dadurch reduziert sich auch die Gefahr, dass ein teilweise aktivierter Klebestreifen 6 beim Abtrennen an der Trennvorrichtung 18 anhaftet.

Die Vorrichtung 1 umfasst ein Magazin 28 zur Aufnahme einer Spule 29 mit dem wenigstens einen Klebestreifen 6, wobei Führungsrollen 30 zur Führung des wenigstens einen Klebestreifens 6 zur Klebestreifen-Beschichtungsvorrichtung 5 vorgesehen sind. Die Führungsrolle 30 ist rein beispielhaft für eine Führung zu verstehen und kann beispielsweise auch durch eine Führungsbacke, einen Führungsschlitz oder ähnliches ausgeführt sein.

Anders als im dargestellten Fall kann das Magazin 28 ein öffenbares Gehäuse umfassen, bevorzugt wobei das Gehäuse wenigstens einen Anschluss zur Befüllung des Gehäuses mit einem Gas umfasst. Bei besonders reaktiven Klebstoffen bietet es sich z.B. an, das Gehäuse mit Stickstoff zu befüllen, um eine vorzeitige Aktivierung des Klebstoffs zu vermeiden.

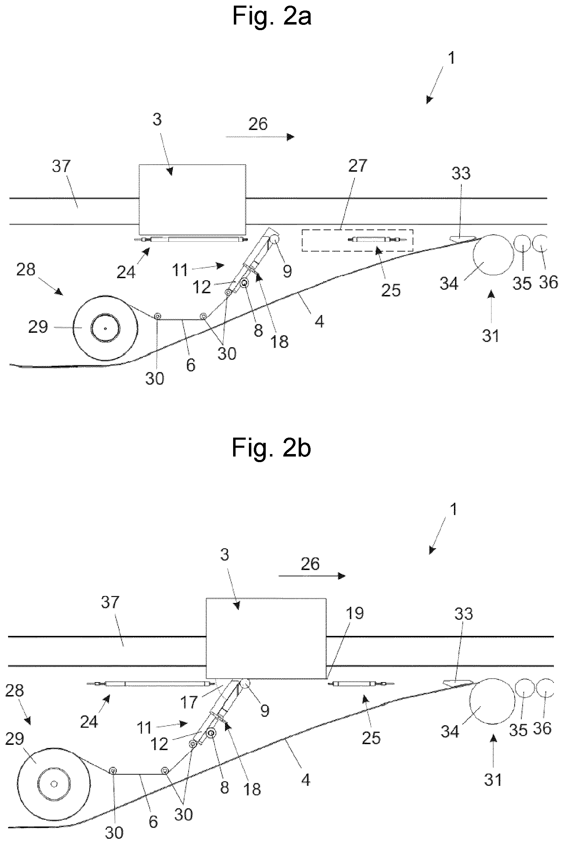

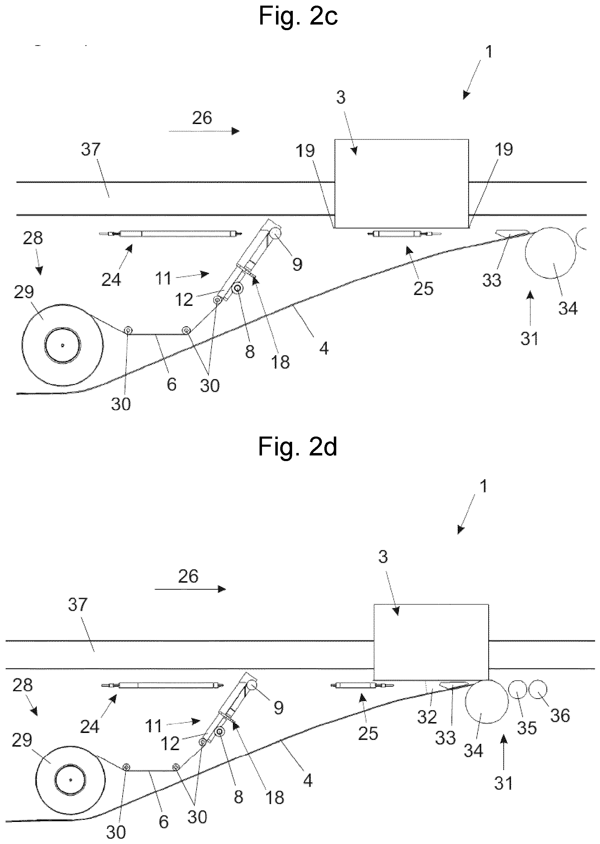

Die Deckmaterial-Beschichtungsvorrichtung 7 umfasst eine Deckmaterial-Zuführvorrichtung 31, mit welcher das Deckmaterial 4 zur Werkstückoberfläche 2 führbar ist, wobei die Deckmaterial-Zuführvorrichtung 31 derart ausgebildet ist, dass das Deckmaterial 4 unter einem Winkel 32 der Werkstückoberfläche 2 zuführbar ist, der kleiner ist als der Winkel 17, unter welchem der wenigstens eine Klebestreifen 6 der Werkstückoberfläche 2 zuführbar ist (vergleiche auch die Figuren 2b und 2d).

Die Deckmaterial-Beschichtungsvorrichtung 7 kann Führungsrollen zur Führung des Deckmaterials 4 umfassen, welche der Übersichtlichkeit halber in den Figuren nicht dargestellt sind.

Die Deckmaterial-Zuführvorrichtung 31 umfasst einen Führungskeil 33 und Anpressrollen 34, 35, 36.

Dabei kann die Anpressrolle 34 antreibbar sein. Weiterhin bietet es sich an, dass die Anpressrollen 35, 36 konisch ausgebildet sind, wobei sich bevorzugt eine der Anpressrollen 35, 36 in Richtung der Oberkante des Deckmaterials 4 hin verbreitert und eine der Anpressrollen 35, 36 in Richtung der Unterkante des Deckmaterials 4, wodurch sichergestellt werden kann, dass das Deckmaterial 4 an der Unter- und Oberkante zuverlässig an das Werkstück 2 gepresst wird.

Der Führungskeil 33 weist ein Spiel zum Werkstück 3 auf (vergleiche auch Figur 2d).

Die Vorrichtung 1 umfasst eine Werkstück-Transportvorrichtung 37 zum Fortbewegen des Werkstücks 3 in einer vorbestimmten Durchlaufrichtung 26. Es kann sich dabei z.B. um einen Bandförderer handeln.

Beim Klebestreifen 6 kann es sich um einen Klebestreifen 6 aus einer homogenen trägermittellosen Masse handeln, vorzugsweise wobei die Masse wenigstens ein isocyanatreaktives Polymer, welches durch Wärmeeinwirkung aktivierbar ist, umfasst.

Die Figuren 2a bis 2d zeigen ein mögliches Ausführungsbeispiel eines Verfahrens zur Beschichtung der Oberfläche 2 des Werkstücks 3 mit einem Deckmaterial 4 mittels der Vorrichtung 1.

In einem ersten Verfahrensschritt wird die Werkstückoberfläche 2 mit wenigstens einem Klebestreifen 6 vorbeschichtet (vgl. Figur 2b).

In einem zweiten Verfahrensschritt wird die mit dem wenigstens einen Klebestreifen 6 vorbeschichtete Werkstückoberfläche 2 mit dem Deckmaterial 4 beschichtet (vgl. Figur 2d).

Vor dem ersten Verfahrensschritt wird die unbeschichtete Werkstückoberfläche 2 durch die vor der Andruckrolle 9 angeordnete Aktivierungsvorrichtung 24 aktiviert (vgl. Figur 2a).

Nach dem ersten Verfahrensschritt und vor dem zweiten Verfahrensschritt wird die mit dem wenigstens einen Klebestreifen 6 vorbeschichtete Werkstückoberfläche 2 durch die hinter der Andruckrolle 9 angeordnete Aktivierungsvorrichtung 25 aktiviert (vgl. Fig. 2c).

In der Figur 2a ist mit gestrichelten Linien eine Position 27 zur lösbaren Befestigung einer Leimauftragsvorrichtung angedeutet, wobei die Position 27 bezogen auf eine Durchlaufrichtung 26 des Werkstücks 3 zwischen der Klebestreifen-Beschichtungsvorrichtung 5 und der Deckmaterial-Beschichtungsvorrichtung 7 angeordnet ist. Bei der Leimauftragsvorrichtung kann es sich beispielsweise um ein Leimbecken zur Auftragung eines EVA-Leims handeln.

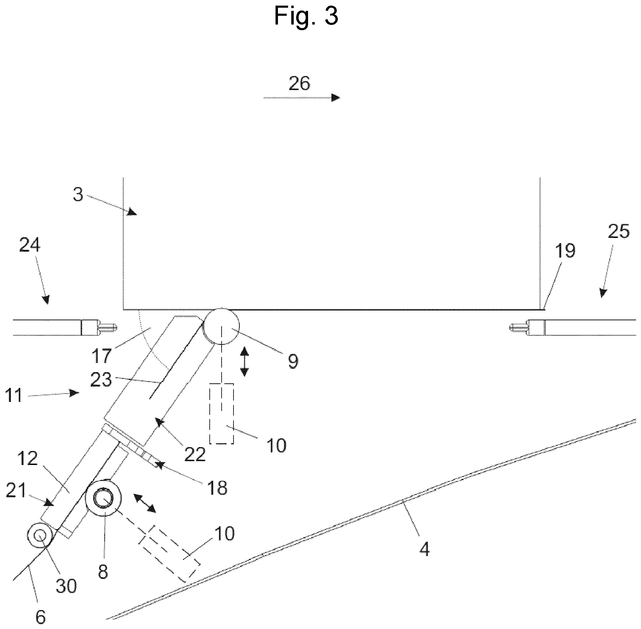

Die Figur 3 zeigt einen vergrößerten Teilausschnitt, welcher die Klebestreifen-Zuführvorrichtung 11 und das Werkstück 3 kurz vor Beendigung der Vorbeschichtung der Werkstückoberfläche 2 mit dem Klebestreifen 6 zeigt.

Aus dieser Darstellung geht besonders gut hervor, dass die Klebestreifen-Zuführvorrichtung 11 Führungs- und/oder Haltevorrichtungen 21, 22 zum Führen und/oder Halten des Klebestreifens 6 vor und hinter der Trennstelle, welche durch die Trennvorrichtung 18 definiert ist, umfasst.

Dabei ist die Führungs- und/oder Haltevorrichtung 22 dazu ausgebildet, einen zwischen der Andruckrolle 9 und der Trennvorrichtung 18 angeordneten und noch auf die Werkstückoberfläche 2 zu applizierenden Restabschnitt 23 des wenigstens einen Klebestreifens 6 zu führen und/oder halten.

Gestrichelt angedeutet sind weiterhin Stellvorrichtungen 10, mit welchen die Förderrolle 8 und die Andruckrolle 9 lageverstellbar sind, wobei die Stellvorrichtungen 10 wie im dargestellten Fall Kolben-Zylinder-Einheiten umfassen können. Alternativ oder ergänzend zu den Kolben-Zylinder-Einheiten können die Stellvorrichtungen 10 einen Linearantrieb und/oder Schwenkantrieb oder dergleichen umfassen.

Die Förderrolle 8 ist derart lageverstellbar, dass ein Kontakt mit dem wenigstens einen Klebestreifen 6 aufhebbar ist, sobald der wenigstens eine Klebestreifen 6 abschnittsweise an der Werkstückoberfläche 2 anhaftet. Konkret wird die Förderrolle 8 im Zuge des ersten Verfahrensschritts derart lageverstellt, dass ein Kontakt mit dem wenigstens einen Klebestreifen 6 aufgehoben wird, sobald der wenigstens eine Klebestreifen 6 abschnittsweise an der Werkstückoberfläche 2 anhaftet.

Die Andruckrolle 9 ist derart lageverstellbar, dass ein Kontakt mit dem wenigstens einen Klebestreifen 6 beim oder unmittelbar nach einem erstmaligen abschnittsweisen Anhaften des wenigstens einen Klebestreifens 6 an der Werkstückoberfläche 2 herstellbar ist. Konkret wird die Andruckrolle 9 im Zuge des ersten Verfahrensschritts derart lageverstellt, dass ein Kontakt mit dem wenigstens einen Klebestreifen 6 beim oder unmittelbar nach einem erstmaligen abschnittsweisen Anhaften des wenigstens einen Klebestreifens 6 an der Werkstückoberfläche 2 hergestellt wird, d.h. sobald die rechte Ecke sich auf Höhe der Andruckrolle 9 befindet oder unmittelbar nachdem diese Ecke die Andruckrolle 9 passiert hat.

Um die Förderrolle 8 und/oder die Andruckrolle 9 zu einem vorbestimmten Zeitpunkt zu verstellen, kann es hilfreich sein, die Geschwindigkeit des Werkstücks 3 zu erfassen. Hierzu kann die Vorrichtung 1 beispielsweise einen Sensor, welcher die Lage der Vorder- und/oder Hinterkante des Werkstücks 3 erfasst, aufweisen.

Die Förderrolle 8 und die Andruckrolle 9 sind über einen Verstellweg von 0,1 mm bis 10,0 mm, vorzugsweise 0,5 mm bis 2,5 mm, lageverstellbar.

Im Zuge des ersten Verfahrensschritts wird der wenigstens eine Klebestreifen 6 durchtrennt, noch bevor die zu beschichtende Werkstückoberfläche 2 mit dem wenigstens einen Klebestreifen 6 vollständig vorbeschichtet ist, wobei der zwischen der Andruckrolle 9 und der Trennvorrichtung 18 angeordnete und noch auf die Werkstückoberfläche 2 zu applizierende Restabschnitt 23 des wenigstens einen Klebestreifens 6 von der Führungs- und/oder Haltevorrichtung 22 temporär geführt und/oder gehalten wird, bevor er auf die Werkstückoberfläche 2 appliziert wird.

Es kann, wie in den Figuren dargestellt, vorgesehen sein, dass der wenigstens eine Klebestreifen beidseitig mit einem geringfügigen Überstand 19 an der Werkzeugoberfläche 2 angehaftet wird.

Die Klebestreifen-Zuführvorrichtung 11 ist in Längserstreckung unter einem Winkel 17 von mehr als 35°, vorzugsweise unter einem Winkel 17 von ca. 55°, zur zu beschichtenden Werkstückoberfläche 2 angeordnet. Dies bietet den Vorteil, dass einerseits eine klare räumliche Trennung zwischen der Trennvorrichtung 18 und der Aktivierungsvorrichtung 24 erzielt wird. Gleichzeitig ist genügend Platz vorhanden, um die Aktivierungsvorrichtung 24 in geringem Abstand zur Klebestreifen-Zuführvorrichtung 11 anzuordnen. Je länger der für das Werkstück 3 zurückzulegende Weg zwischen der Aktivierungsvorrichtung 24 und der Klebestreifen-Zuführvorrichtung 11 ist, umso mehr Energie muss für die Aktivierung der Werkstückoberfläche 3 aufgebracht werden, um ein zwischenzeitliches Abkühlen zu kompensieren. Im Umkehrschluss bedeutet das, dass ein geringer Abstand wie im dargestellten Ausführungsbeispiel besonders vorteilhaft ist.

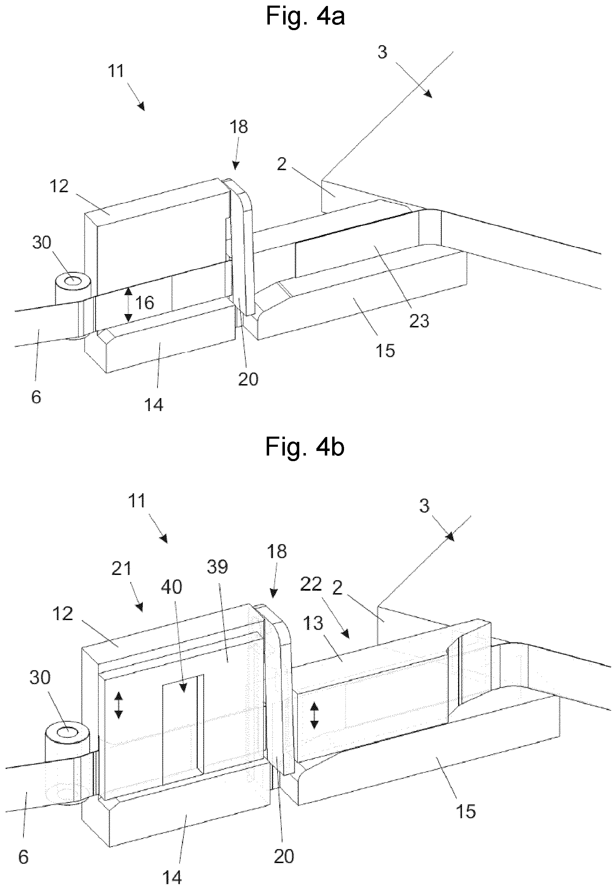

Die Figuren 4a und 4b zeigen im Wesentlichen den in der Fig. 3 dargestellten Teilausschnitt, wobei unterschiedliche Teile der Klebestreifen-Zuführvorrichtung 11 der Übersichtlichkeit halber weggelassen wurden.

Aus diesen Figuren geht insbesondere hervor, dass die Klebestreifen-Zuführvorrichtung 11 eine Führungsbacke 12 und eine Führung 13 für den Klebestreifen 6 umfasst, wobei die Führungsbacke 12 oder ein davon umfasstes Gegenstück 39 und die Führung 13 relativ zu einer Basis 14, 15 verstellbar und/oder austauschbar sind, um Klebestreifen 6 mit unterschiedlichen Höhen 16 zu führen. Zur Verstellung können beispielsweise Gleitführungen in Kombination mit Klemmmitteln zur Arretierung einer eingestellten Lage vorgesehen sein.

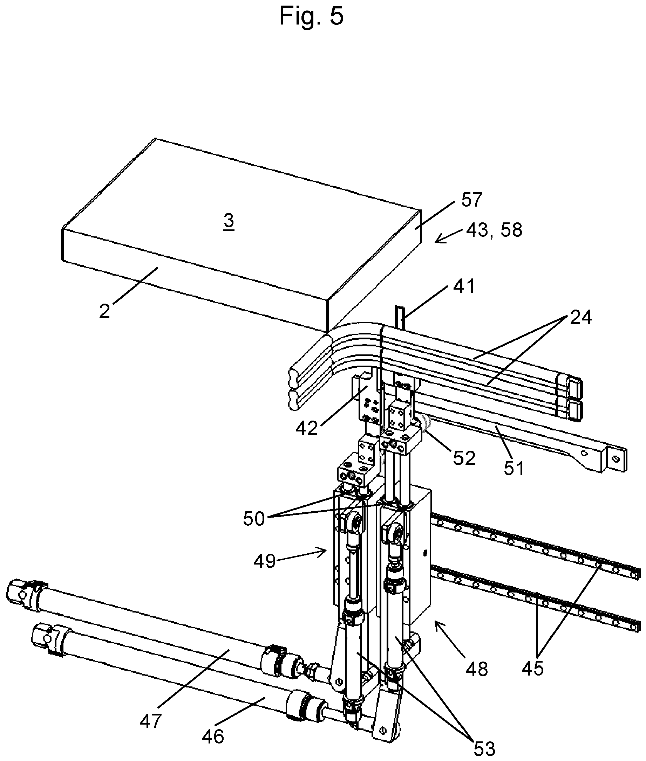

Das Gegenstück 39 kann einen Schlitz 40 aufweisen, durch welchen die nicht dargestellte Förderrolle 8 in Kontakt zum wenigstens einen Klebestreifen 6 treten kann. Fig. 5 zeigt einen Ausschnitt einer Vorrichtung 1 zur Abschirmung einer an die zu beschichtende Oberfläche 2 angrenzende Oberfläche 43 des Werkstücks 3 in einer schematisch dargestellten, perspektivischen Ansicht.

In dieser Figur sind zwei Abschirmvorrichtungen 41, 42 zu erkennen, welche dazu ausgebildet sind, eine angrenzende, bereits mit einem Deckmaterial 57 beschichtete Oberfläche 43 bezüglich einer abgegebenen Wärmestrahlung der Aktivierungsvorrichtung 24 zu schützen. Die angrenzende Oberfläche 43 stellt dabei eine Stirnfläche 58 des Werkstückes 3 dar.

Die Aktivierungsvorrichtung 24, genauer gesagt: die Aktivierungsvorrichtungen 24, dieses Ausführungsbeispiels sind bei als Heizvorrichtungen ausgebildet, wobei durch abgegebenen Wärmestrahlung der Aktivierungsvorrichtungen 24 eine zu beschichtende Oberfläche 2 des Werkstücks 3 aktiviert wird.

Wie bereits zuvor ausgeführt, kann diese Aktivierung durch Erwärmung direkt die Oberfläche 2 des Werkstücks 3, einen bereits auf die Oberfläche 2 aufgebrachten Klebestreifen 6 und/oder anderwärtig auf die Oberfläche 2 aufgebrachte Materialien aktivieren.

Die Abschirmvorrichtungen 41, 42 dieses Ausführungsbeispiels weisen jeweils ein Abschirmelement 55 und ein Abtastelement 56 auf.

Die Abschirmvorrichtungen 41, 42 (genauer gesagt: die Abschirmelemente 55 der Abschirmvorrichtungen 41, 42) dieses Ausführungsbeispiels sind sozusagen als Blenden ausgeführt, welche an der angrenzenden Oberfläche 43 oder 44 an einer der Aktivierungsvorrichtung 24 zugewandten Seite geführt werden, wodurch die bereits mit einem Deckmaterial 57 beschichteten Oberflächen 43, 44 von der Wärmeenergie der Aktivierungsvorrichtungen 24 abgeschirmt werden.

In anderen Worten kann somit gesagt werden, dass durch die Abschirmvorrichtungen 41, 42 dieses Ausführungsbeispiels ein Schattenwurf auf die bereits mit einem Deckmaterial 57 beschichteten Oberflächen 43, 44 erzeugt wird, wodurch die beschichteten Oberflächen 43, 44 keiner direkten Beeinflussung der Wärmeenergie der Aktivierungsvorrichtungen 24 unterliegen.

Die Abschirmvorrichtungen 41, 42 sind durch die Linearführungen 45 entlang einer Relativbewegung zwischen dem Werkstück 3 und der Aktivierungsvorrichtung 24 (in einer horizontalen Richtung) geführt.

Durch die Antriebe 46, 47 können die Abschirmvorrichtungen 41, 42 relativ zur Aktivierungsvorrichtung 24 bewegt werden, wobei sie an dem vorbeifahrenden Werkstück 3 mit den Abtastelementen 56 angepresst und/oder angelegt werden können und mit dem vorbeifahrenden Werkstück 3 relativ zu den Aktivierungsvorrichtungen 24 geführt / bewegt werden können.

Alternativ kann es auch vorgesehen sein, dass die Abschirmvorrichtungen 41, 42 relativ zur Aktivierungsvorrichtung 24 durch eine Zwangsführung (wobei beispielsweise die Abschirmvorrichtungen 41, 42 über einen Mitnehmer durch das vorbeifahrende Werkstück 3 angetrieben werden) bewegt werden, wobei separate Antriebe 46, 47 eingespart werden können. Die Rückstellung der Abschirmvorrichtungen 41, 42 in eine Ausgangslage und das Andrücken der Abschirmvorrichtungen 41, 42 an das Werkstück 3 kann beispielsweise durch eine Feder (oder Ähnliches) vorgenommen werden.

Mittels der Hubvorrichtungen 48, 49 können die Abschirmvorrichtungen 41, 42 in vertikaler Richtung mit Hilfe der Pneumatikzylinder 53 bewegt werden, wobei die Hubvorrichtungen an den Abtastelementen 56 der Abschirmvorrichtungen 41, 42 angeordnet sind.

Natürlich sind die dargestellten Pneumatikzylinder 53 als Beispiele zu verstehen. Auch jeglicher anderer Aktuatortyp (beispielsweise elektrisch oder hydraulisch) könnte für diese Anwendung in Betracht gezogen werden.

In vertikaler Richtung sind die Abschirmvorrichtungen 41, 42 über die vertikalen Linearführungen 50 geführt.

Die Abschirmvorrichtungen 41, 42 können in vertikaler Richtung eine Hub- oder Senkbewegung ausführen, wobei über einen Pneumatikzylinder 53 die erste Abschirmvorrichtung 41 über die vertikale Linearführung 50 gehoben oder gesenkt werden kann. In gleicher Weise kann die zweite Abschirmvorrichtung 42 ebenfalls unter Zuhilfenahme des Pneumatikzylinders 53 und der vertikalen Linearführung 50 vertikal bewegt werden.

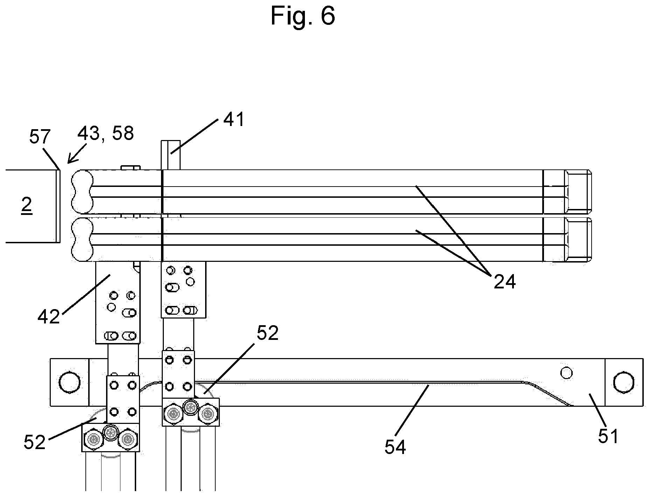

Genau genommen werden in diesem Ausführungsbeispiel die Führungsrollen 52 (vergl. hierzu auch Fig. 6) über die Pneumatikzylinder 52 unter Zuhilfenahme der vertikalen Linearführungen 50 an die Führungsschiene 51 angepresst oder angelegt, wobei die Führungsschiene 51 eine Steuerkurve 54 aufweist, an welcher die Führungsrollen 52 der ersten Abschirmvorrichtung 41 und der zweiten Abschirmvorrichtung 42 anliegen.

Wenn nun über die Antriebe 46, 47 die erste Abschirmvorrichtung 41 und/oder die zweite Abschirmvorrichtung 42 in horizontaler Richtung entlang der stationär befestigten Führungsschiene 51 bewegt werden, folgen die Führungsrollen 52 der Steuerkurve 54.

Da die Steuerrollen 52 über die Pneumatikzylinder 53 an die Steuerkurve 54 angelegt oder angepresst werden, erfolgt bei einer horizontalen Bewegung der Abschirmvorrichtung 41 und/oder der Abschirmvorrichtung 42 eine Hub- oder Senkbewegung.

In anderen Worten ausgedrückt ist über die erste Hubvorrichtung 48 und/oder die zweite Hubvorrichtung 49 eine Zwangsführung über die Steuerkurve 54 bezüglich einer horizontalen Position der ersten Abschirmvorrichtung 41 und/oder der zweiten Abschirmvorrichtung 42 gegeben.

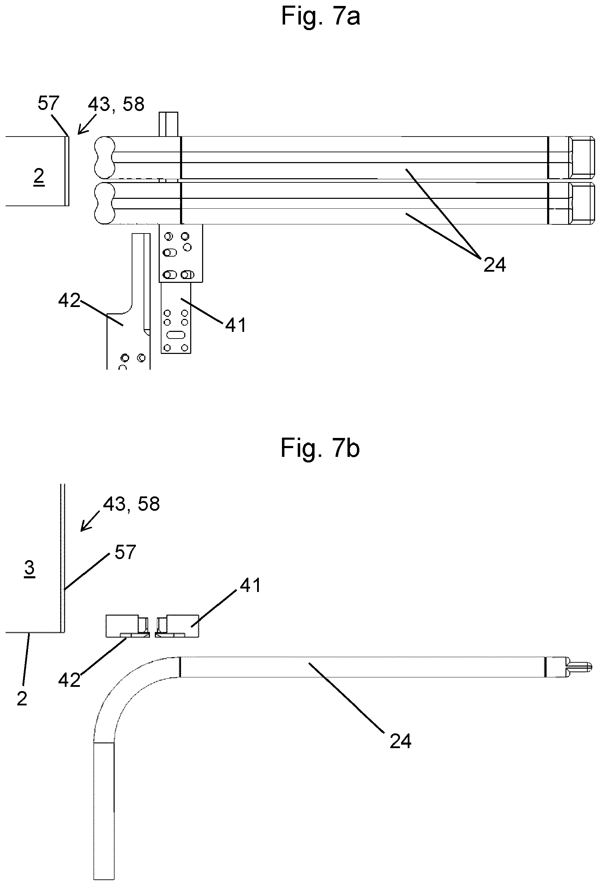

Wie im Detail die Bewegung der Abschirmvorrichtungen 41, 42 während eines Durchlaufes des Werkstücks 3 an den Aktivierungsvorrichtungen 24 ausgeführt sein kann, wird im Folgenden durch die Figuren 7a bis 19b erläutert, wobei jeweils die Fig. a eine Seitenansicht des aktuellen Zustandes darstellt und Fig. b eine Draufsicht des aktuellen Zustandes zeigt.

So zeigen Fig. 7a und 7b eine Ausgangsstellung der Abschirmvorrichtungen 41, 42. In dieser Ausgangsstellung befindet sich die Abschirmvorrichtung 41 in einem angehobenen Zustand, wobei die Abschirmvorrichtung 42 noch abgesenkt ist (vergl. hierzu auch Fig. 6).

Die Aktivierungsvorrichtungen 24, genauer gesagt: die Heizvorrichtungen, sind aktiv und üben bereits eine Wärmestrahlung aus.

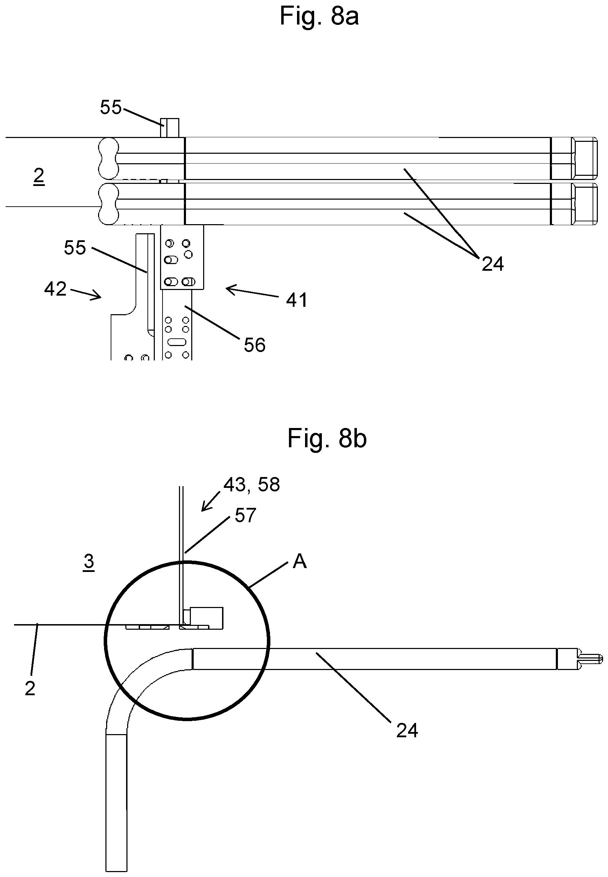

Das Werkstück 3 nähert sich mit seiner zu beschichtenden Oberfläche 2 und der angrenzenden ( beispielsweise bereits beschichteten) Oberfläche 43 an die Aktivierungsvorrichtungen 24 an, bis die bereits beschichtete, angrenzende Oberfläche 43 an der ersten Abschirmvorrichtung 41 (welche sich in einem angehobenen Zustand befindet) anliegt, was durch die Fig. 8a, 8b gezeigt ist.

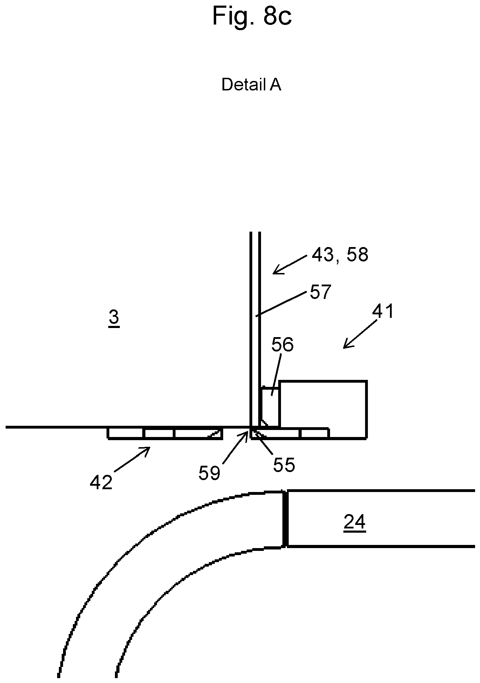

Fig. 8c zeigt dabei die in Fig. 8b gekennzeichnete Detaildarstellung, auf welche zur besseren Veranschaulichung des Folgenden verwiesen wird.

In der Draufsicht, welche durch Fig. 8b gezeigt ist, ist gut zu erkennen, wie die Abschirmvorrichtung 41 die an die zu beschichtende Oberfläche 2 angrenzende Oberfläche 43 von den Aktivierungsvorrichtungen 24 abschirmt, indem die Abschirmvorrichtung 41 einen Schattenwurf auf die Oberfläche 43 generiert, wodurch die durch die Aktivierungsvorrichtungen 24 ausgestrahlte Wärmestrahlung nicht direkt an die bereits beschichtete Oberfläche 43 herantreten kann.

Es ist zu erkennen, wie sich das Abtastelement 56 der Abschirmvorrichtung 41 an die angrenzende Oberfläche 43 anlegt und das Abschirmelement 55 der Abschirmvorrichtung 41 die angrenzende Oberfläche 43 (genauer gesagt: die Stirnfläche 58 des Werkstückes 3) und eine an der angrenzenden Oberfläche 43 angeordnete Deckschicht 58 gegenüber der Aktivierungsvorrichtung 24 abschirmt.

Um die an der angrenzenden Oberfläche 43 angeordnete Deckschicht 57 auch in einem Stirnbereich 59 abzuschirmen, überdeckt das Abschirmelement 55 auch einen kleinen Teil der zu beschichtenden Oberfläche 2, wobei dieser kleine Teil der zu beschichtenden Oberfläche 2 - der durch den Querschnitt der Deckschicht 57 ausgebildete Teil, welcher an der angrenzenden Oberfläche 43 angeordnet ist - nicht Teil der zu beschichtenden Oberfläche 2, sondern Teil der angrenzenden Oberfläche 43 ist.

Somit wird in diesem Ausführungsbeispiel auch der Stirnbereich 59 der an die zu beschichtende Oberfläche 2 angrenzenden Oberfläche 43 durch die Abschirmvorrichtung 41 (und wie im Folgenden auch ersichtlich durch die Abschirmvorrichtung 42) vor dem Einfluss der Aktivierungsvorrichtung 24 geschützt.

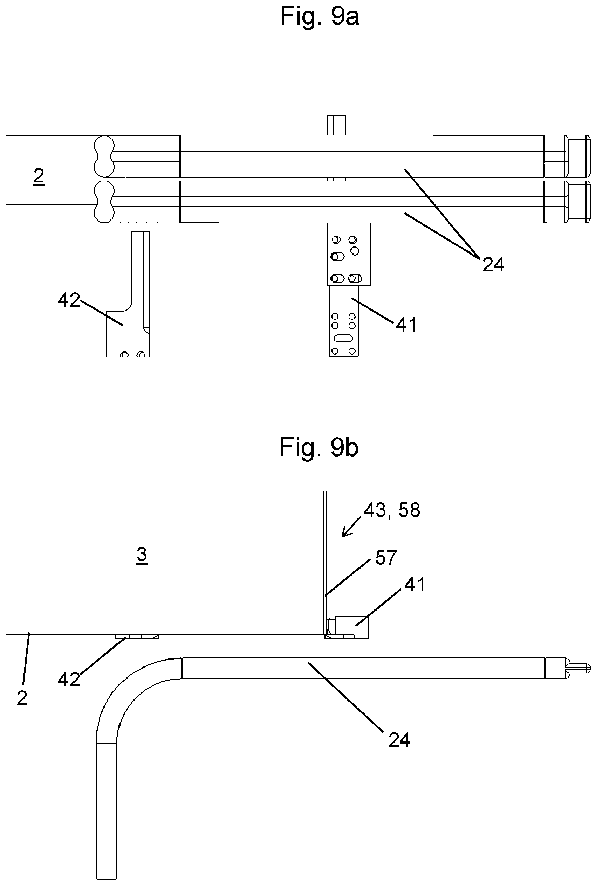

Nachdem die erste Abschirmvorrichtung 41 an der Oberfläche 43 anliegt, kann die Abschirmvorrichtung 41 horizontal entlang der Aktivierungsvorrichtungen 24 verschoben werden (was durch die Fig. 9a du 9b zu erkennen ist), indem sie entweder passiv vom Werkstück 3 mitgeschoben wird oder durch den Antrieb 46 mit der gleichen Relativgeschwindigkeit wie das Werkstück 3 bezüglich den Aktivierungsvorrichtungen 24 angetrieben wird.

Vorteilhafterweise kann es vorgesehen sein, dass der als Pneumatikzylinder ausgebildete Antrieb 46 der ersten Abschirmvorrichtung 41 drucklos geschaltet wird, sodass das Werkstück 3 die an der angrenzenden Oberfläche 43 anliegende Abschirmvorrichtung 41 entlang der Aktivierungsvorrichtung 24 vor sich herschiebt, wobei jedoch durch die Reibung im Antrieb 46 und der Führungen die Abschirmvorrichtung 41 mit einer kleinen Kraft an die Oberfläche 43 gehalten wird, sodass sie stets an der Oberfläche 43 anliegt.

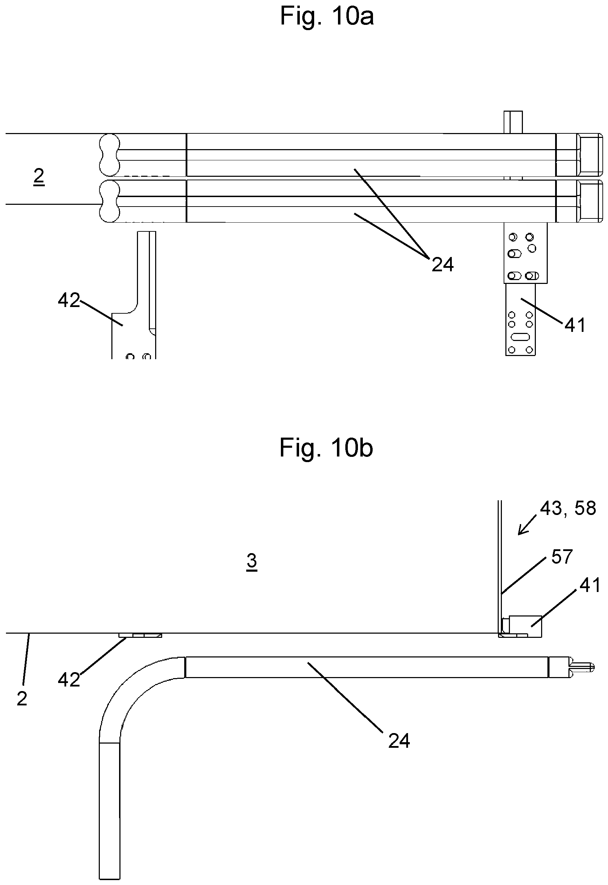

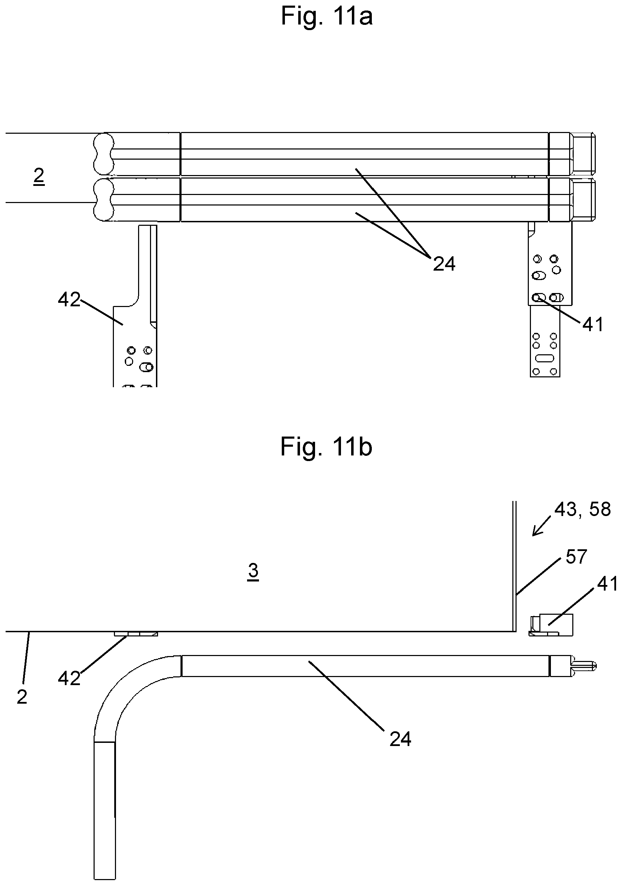

Wenn die erste Abschirmvorrichtung 41 die Aktivierungsvorrichtung 24 passiert hat, wie in Fig. 10a und Fig. 10b gezeigt, wird diese durch die Hubvorrichtung 48 (über den Pneumatikzylinder 53) wieder nach unten (in eine abgesenkte Position) wegbewegt, wie durch Fig. 11a und 11b zu erkennen ist. Hierbei kann wieder der erste Antrieb 46 aktiviert werden, um die erste Abschirmvorrichtung 41 aktiv in die abgesenkte Position zu bewegen.

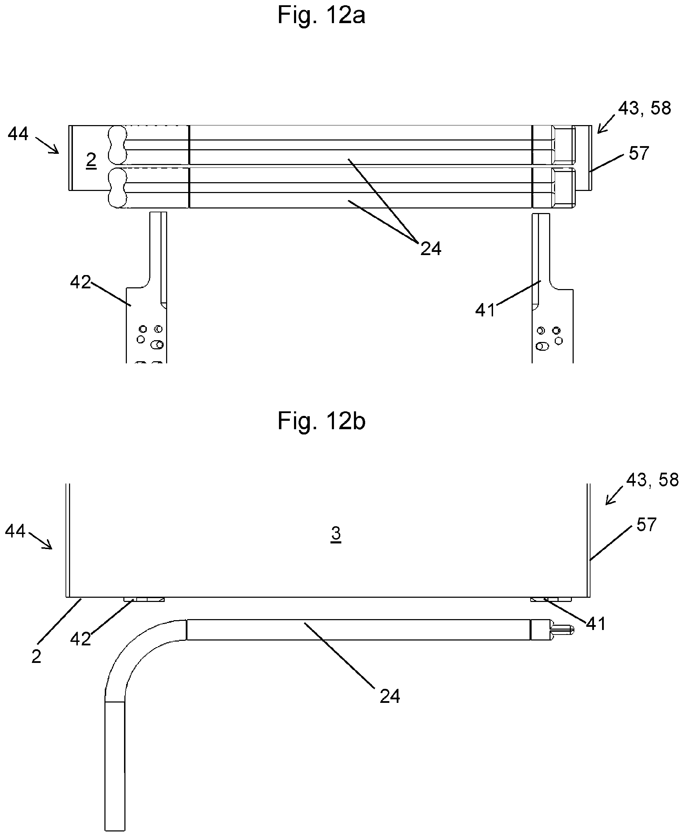

Die Abschirmvorrichtung 41 wird anschließend in einer Position unterhalb des Werkstücks 3 verharrt (wie durch Fig. 12a und 12b zu erkennen ist), sodass das Werkstück 3 mit seinem Vorschub über die Vorrichtung 1 bewegt werden kann. Das Werkstück 3 bewegt sich somit ungehindert oberhalb der Abschirmvorrichtung 41 hinweg.

Das Absenken der Abschirmvorrichtung 41 in eine Position unterhalb des Werkstücks 3 geschieht wiederum, indem der Pneumatikzylinder 53 aktiviert wird (vergl. hierzu auch Fig. 6).

Jedoch könnte es auch vorgesehen sein, dass das Absenken der Abschirmvorrichtung 41 in eine Position unterhalb des Werkstücks 3 passiv durch die Steuerkurve 54 vorgenommen wird, wobei die Führungsrolle 52 an der Steuerkurve 54 der Führungsschiene 51 durch die Horizontalbewegung zwangsläufig nach unten vertikal ausgelenkt wird.

Wenn sich das Werkstück 3 weiter entlang der Aktivierungsvorrichtung 24 bewegt, nähert sich eine zweite angrenzende (beispielsweise bereits beschichtete) Oberfläche 44, welche ebenfalls eine Stirnfläche 58 des Werkstückes 3 ausbildet.

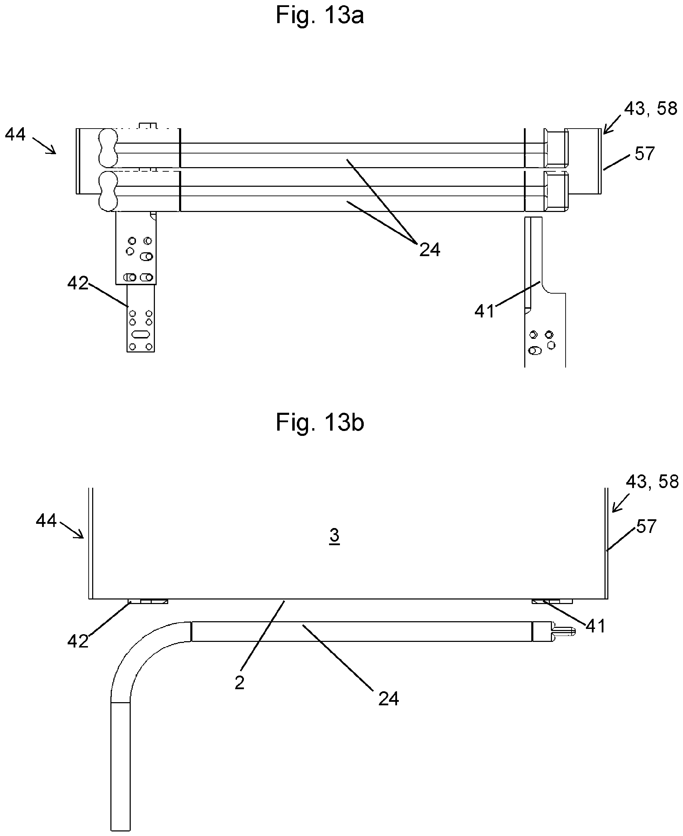

Um auch diese zweite angrenzende Oberfläche 44 schützen zu können, indem sie gegenüber der Aktivierungsvorrichtung 24 abgeschirmt wird, wird durch die zweite Hubvorrichtung 49, welche ebenfalls als Pneumatikzylinder 53 ausgeführt ist, die zweite Abschirmvorrichtung 42 durch eine Horizontalbewegung in eine Ausgangsposition angehoben (siehe hierzu Fig. 13a und 13b).

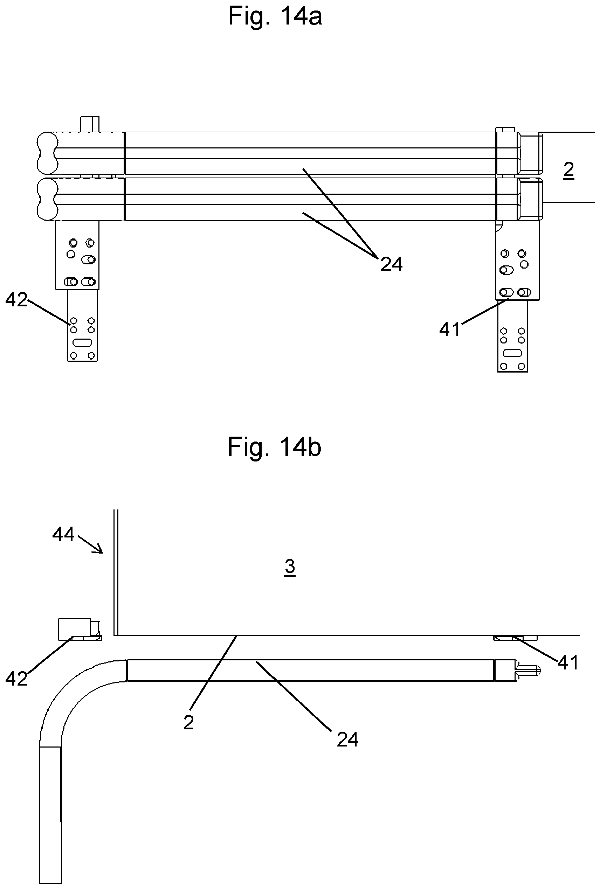

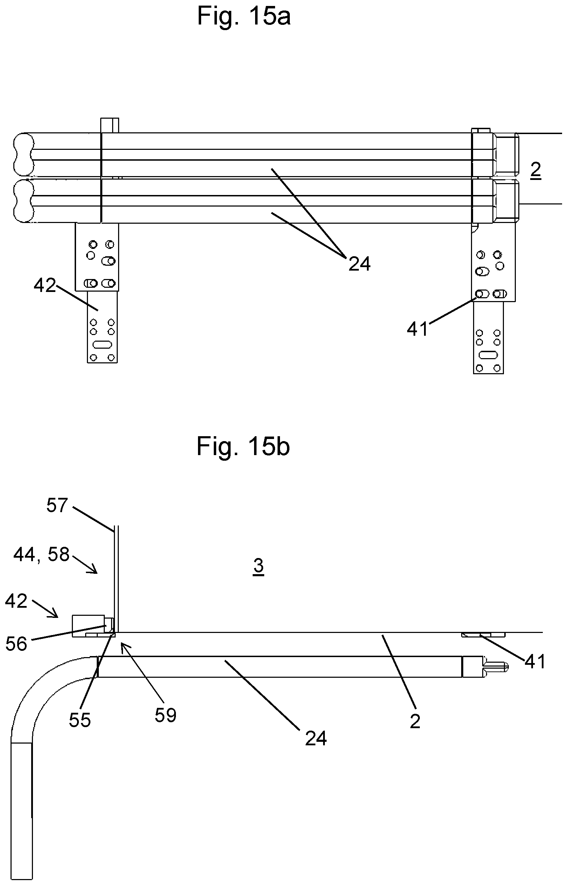

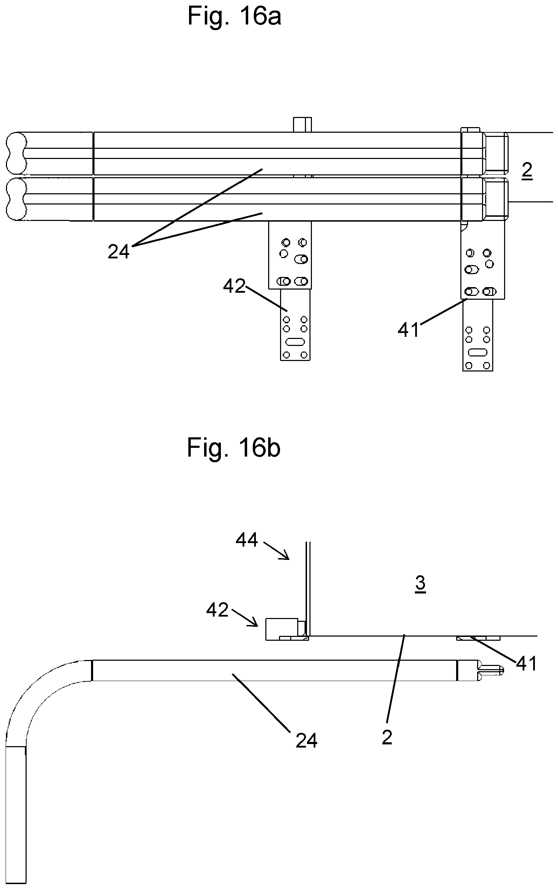

Wenn nun die zweite angrenzende Oberfläche 44 den Anfang der Aktivierungsvorrichtungen 24 erreicht (wie durch die Fig. 14a und 14b gezeigt), kann der zweite Antrieb 47 aktiviert werden, wobei es vorzugsweise vorgesehen sein kann, dass der als Pneumatikzylinder ausgebildete zweite Antrieb 47 mit einem leichten Überdruck beaufschlagt wird, sodass die zweite Abschirmvorrichtung 42 (genauer gesagt: das Abtastelement 56 der zweiten Abschirmvorrichtung 42) leicht an die zweite angrenzende Oberfläche 44 angepresst wird und der Bewegung des Werkstücks 3 relativ zu den Aktivierungsvorrichtungen 24 folgt, wie es durch die Figuren 15a und 15b gezeigt ist bzw. in einem weiteren, verfahrenen Schritt durch die Figuren 16a und 16b.

Durch das Abschirmelement 55 der zweiten Abschirmvorrichtung 42 wird die zweite angrenzende, mit einem Deckmaterial 57 beschichtete Oberfläche 44 (vor allem in einem Stirnbereich 59 der zweiten angrenzenden Oberfläche 44) von der Aktivierungsvorrichtung 24 abgeschirmt.

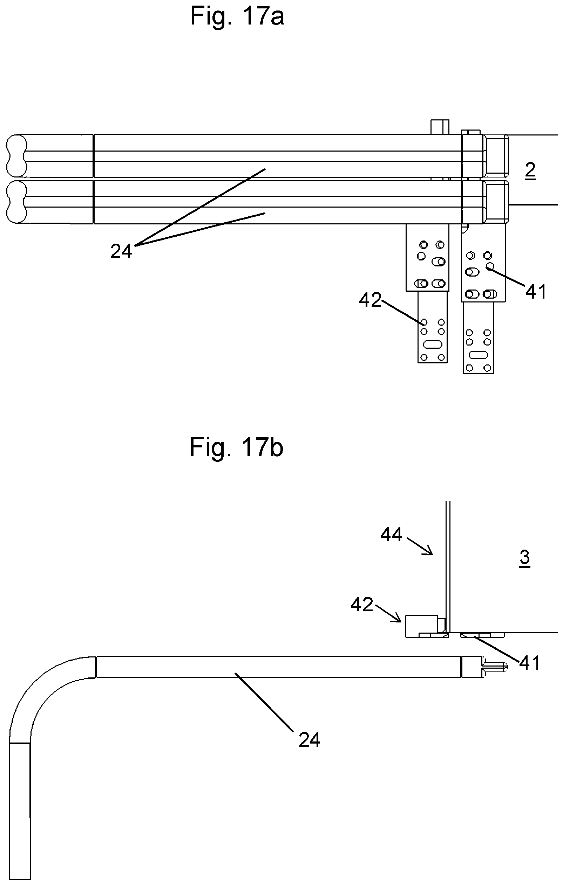

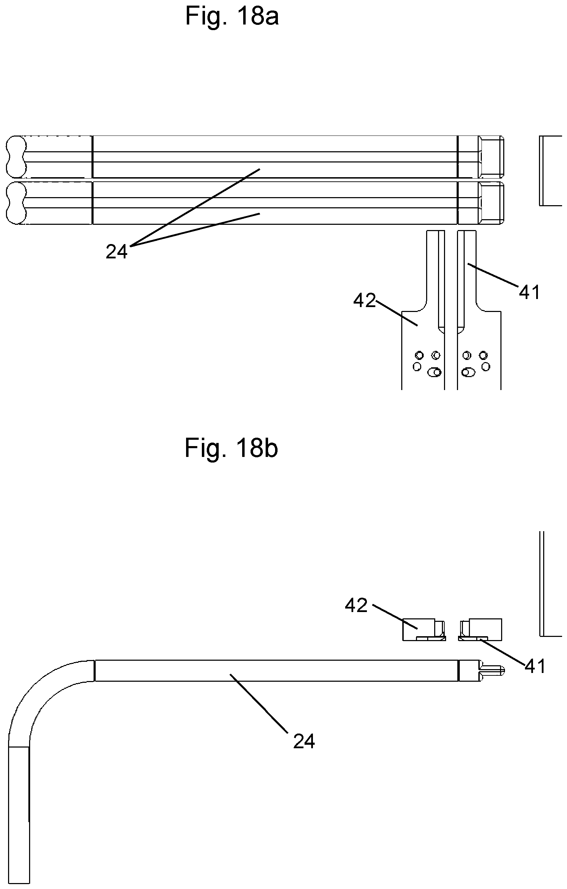

Wenn nun auch die zweite Abschirmvorrichtung 42 ein Ende der Aktivierungsvorrichtungen 24 erreicht (wie durch die Fig. 17a und 17b gezeigt), wird auch die zweite Aktivierungsvorrichtung 42 über die Hubvorrichtung 49 (genauer gesagt: den Pneumatikzylinder 53) in eine abgesenkte Position zurückgefahren. Dies ist durch die Fig. 18a und 18b zu erkennen.

Alternativ könnte es vorgesehen sein, dass die zweite Abschirmvorrichtung 42, wenn sie ein Ende der Aktivierungsvorrichtungen 24 erreicht, über die an der Steuerkurve 54 anliegende Führungsrolle 52 (zwangsgeführt über die Horizontalbewegung) in eine abgesenkte Position zurückgefahren wird.

Das Werkstück 3 kann ungehindert weiter zur nächsten Bearbeitungsstation geführt werden.

Es kann auch vorgesehen sein, dass jede Abschirmvorrichtung 41, 42 eine eigene (separate) Führungsschiene 51 aufweist.

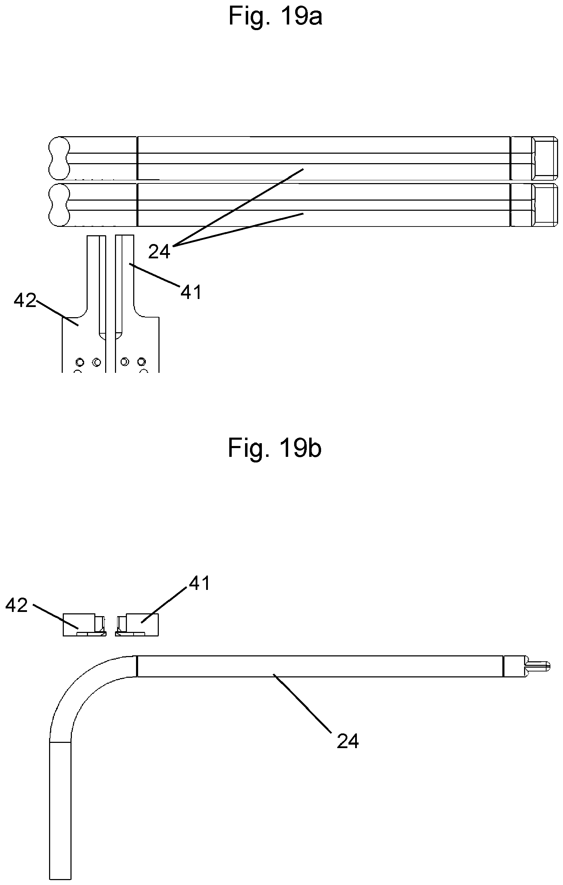

Nachdem sich das Werkstück 3 von den Abschirmvorrichtungen 41, 42 und den Aktivierungsvorrichtungen 24 entfernt hat, kann durch den Rückstellmechanismus, welcher ebenfalls durch die Antriebe 46, 47 ausgebildet ist, in eine Ausgangslage zurückgesetzt werden. Für diese Bewegung werden die doppeltwirkenden Pneumatikzylinder, welche die Antriebe 46, 47 ausbilden, durch eine Druckluft belastet, was die Abschirmvorrichtungen 41, 42 in die Ausgangslage zurücksetzt (wie es durch die Fig. 19a und 19b ersichtlich).

Aus dieser Ausgangslage kann das Verfahren neu starten und ein nächstes Werkstück 3 durch die Abschirmvorrichtungen 41, 42 abgeschirmt werden (der Vorgang von Fig. 7a bis 19b kann wiederholt werden).

### Bezugszeichenliste:

- 1: Vorrichtung
- 2: Oberfläche
- 3: Werkstück
- 4: Deckmaterial
- 5: Klebestreifen-Beschichtungsvorrichtung
- 6: Klebestreifen
- 7: Deckmaterial-Beschichtungsvorrichtung
- 8: Förderrolle
- 9: Andruckrolle
- 10: Stellvorrichtung
- 11: Klebestreifen-Zuführvorrichtung
- 12: Führungsbacke
- 13: Führung
- 14: Basis
- 15: Basis
- 16: Höhe
- 17: Winkel
- 18: Trennvorrichtung
- 19: Überstand
- 20: Messer
- 21: Haltevorrichtung
- 22: Haltevorrichtung
- 23: Restabschnitt
- 24: Aktivierungsvorrichtung
- 25: Aktivierungsvorrichtung
- 26: Durchlaufrichtung
- 27: Position
- 28: Magazin
- 29: Spule
- 30: Führungsrolle
- 31: Deckmaterial-Zuführvorrichtung
- 32: Winkel
- 33: Führungskeil
- 34: Anpressrolle
- 35: Anpressrolle
- 36: Anpressrolle
- 37: Werkstück-Transportvorrichtung
- 38: Reflektor
- 39: Gegenstück
- 40: Schlitz
- 41: Abschirmvorrichtung
- 42: Abschirmvorrichtung
- 43: angrenzende Oberfläche
- 44: zweite angrenzende Oberfläche
- 45: Linearführung
- 46: erster Antrieb
- 47: zweiter Antrieb
- 48: erste Hubvorrichtung
- 49: zweite Hubvorrichtung
- 50: vertikale Linearführung
- 51: Führungsschiene
- 52: Führungsrolle
- 53: Pneumatikzylinder
- 54: Steuerkurve
- 55: Abschirmelement
- 56: Abtastelement
- 57: Deckmaterial
- 58: Stirnfläche
- 59: Stirnbereich

## Patentansprüche

1. Vorrichtung (1) zur Beschichtung einer Oberfläche (2), vorzugsweise einer Schmalfläche, eines, vorzugsweise platten- oder leistenförmigen, Werkstücks (3) mit einem, vorzugsweise streifenförmigen, Deckmaterial (4), mit
- wenigstens einer Aktivierungsvorrichtung (24) zur Aktivierung, vorzugsweise Erwärmung, der zu beschichtenden Oberfläche (2),
- wenigstens einer Fördervorrichtung, vorzugsweise wenigstens eine Förderrolle (8), einen Riemen oder dergleichen aufweisend, welche dazu ausgebildet ist, eine Relativbewegung des Werkstückes (3) zur Aktivierungsvorrichtung (24) herbeizuführen, vorzugsweise wobei das Werkstück (3) mit der zu beschichtenden Oberfläche (2) mittels der wenigstens einen Fördervorrichtung an der wenigstens einen Aktivierungsvorrichtung (24) vorbeiführbar ist,
**dadurch gekennzeichnet, dass** wenigstens eine relativ zur wenigstens einen Aktivierungsvorrichtung (24) bewegbare Abschirmvorrichtung (41) vorgesehen ist, welche dazu ausgebildet ist, eine an die zu beschichtende Oberfläche (2) angrenzende, vorzugsweise mit einem Deckmaterial (57) beschichtete, Oberfläche (43), vorzugsweise eine Stirnfläche (58) des Werkstücks (3) und/oder ein Stirnbereich (59) eines Deckmaterials (57) mit welcher die Oberfläche (43) beschichtet ist, von der wenigstens einen Aktivierungsvorrichtung (24) abzuschirmen während das Werkstück (3) die wenigstens eine Aktivierungsvorrichtung (24) passiert, oder umgekehrt.

2. Vorrichtung nach Anspruch 1, wobei die wenigstens eine Abschirmvorrichtung (41) im Wesentlichen mit derselben Relativgeschwindigkeit, in der das Werkstück (3) relativ zur Aktivierungsvorrichtung (24) bewegbar ist, relativ zur Aktivierungsvorrichtung (24) bewegbar ist.

3. Vorrichtung nach einem der vorhergehenden Ansprüche, wobei wenigstens eine Kopplungsvorrichtung vorgesehen ist, mit welcher die wenigstens eine Abschirmvorrichtung (41), zumindest während der Passage der wenigstens einen Aktivierungsvorrichtung (24), mit dem Werkstück (3) koppelbar ist, und/oder wobei wenigstens ein Antrieb (46, 47) vorgesehen ist, mit welchem die wenigstens eine Abschirmvorrichtung (41) relativ zur wenigstens einen Aktivierungsvorrichtung (24) bewegbar ist.

4. Vorrichtung nach wenigstens einem der vorhergehenden Ansprüche, wobei die wenigstens eine Abschirmvorrichtung (41) relativ zum Werkstück (3) anhebbar oder absenkbar gelagert ist.

5. Vorrichtung nach wenigstens einem der vorhergehenden Ansprüche, wobei wenigstens eine Rückführvorrichtung vorgesehen ist, mit welcher die wenigstens eine Abschirmvorrichtung (41) in eine Ausgangsstellung rückführbar ist.

6. Vorrichtung nach wenigstens einem der vorhergehenden Ansprüche, wobei wenigstens zwei Abschirmvorrichtungen (41, 42) vorgesehen sind, mit denen
- die erste an die zu beschichtende Oberfläche (2) angrenzende Oberfläche (43), vorzugsweise eine Stirnfläche (58) des Werkstücks (3) und/oder ein Stirnbereich (59) eines Deckmaterials (57) mit welcher die Oberfläche (43) beschichtet ist, und
- eine zweite, von der ersten angrenzenden Oberfläche (43) beabstandete, an die zu beschichtende Oberfläche (2) angrenzende, vorzugsweise mit einem Deckmaterial (57) beschichtete, Oberfläche (44), vorzugsweise eine weitere Stirnfläche (58) des Werkstücks (3) und/oder ein Stirnbereich (59) eines Deckmaterials (57) mit welcher die Oberfläche (43) beschichtet ist,
von der wenigstens einen Aktivierungsvorrichtung (24) abschirmbar ist.

7. Vorrichtung nach wenigstens einem der vorhergehenden Ansprüche, wobei die wenigstens eine Aktivierungsvorrichtung (24, 25) eine Wärmequelle, besonders bevorzugt einen Infrarot-Strahler, Laser und/oder eine Heißluftquelle, umfasst.

8. Vorrichtung nach wenigstens einem der vorhergehenden Ansprüche, wobei die wenigstens eine Abschirmvorrichtung (41) wenigstens eine Abdeckung aufweist, wobei die angrenzende Oberfläche (43) mittels der wenigstens einen Abdeckung, vorzugsweise gegenüber einer Wärmestrahlung, abschirmbar ist.

9. Vorrichtung nach wenigstens einem der vorhergehenden Ansprüche, wobei die wenigstens eine Abschirmvorrichtung (41) eine, vorzugsweise pneumatische, Andrückvorrichtung aufweist, mittels welcher die Abschirmvorrichtung (41) an die angrenzende Oberfläche (43) andrückbar ist.

10. Vorrichtung nach wenigstens einem der vorhergehenden Ansprüche, wobei die wenigstens eine Abschirmvorrichtung (41) eine Führungsvorrichtung, vorzugsweise Linearführung (45), in Richtung der Relativbewegung zwischen dem Werkstück (3) und der Aktivierungsvorrichtung (24) aufweist, vorzugsweise wobei die Abschirmvorrichtung (41), besonders bevorzugt passiv, über die Relativbewegung des Werkstück (3) zur Aktivierungsvorrichtung (24) entlang der Führungsvorrichtung bewegbar ist.

11. Vorrichtung nach wenigstens einem der vorhergehenden Ansprüche, wobei die Vorrichtung (1) wenigstens eine Klebestreifen-Beschichtungsvorrichtung (5), mit welcher die Oberfläche (2) mit wenigstens einem Klebestreifen (6) vorbeschichtet werden kann, und wenigstens eine Deckmaterial-Beschichtungsvorrichtung (7), mit welcher die mit dem wenigstens einen Klebestreifen (6) vorbeschichtete Oberfläche (2) mit dem Deckmaterial (4) beschichtet werden kann, aufweist.

12. Vorrichtung nach Anspruch 11, wobei die wenigstens eine Klebestreifen-Zuführvorrichtung (11)
- wenigstens eine Trennvorrichtung (18) zum Durchtrennen des Klebestreifens (6) an einer Trennstelle umfasst, vorzugsweise wobei die wenigstens eine Trennvorrichtung (18) ein relativ zu einem feststehenden Gegenmesser bewegbares Messer (20) umfasst, und/oder
- wenigstens eine Führungs- und/oder Haltevorrichtung (21, 22) zum Führen und/oder Halten des Klebestreifens (6) umfasst, vorzugsweise wobei die wenigstens eine Führungs- und/oder Haltevorrichtung (22) dazu ausgebildet ist, einen noch auf die Oberfläche (2) zu applizierenden Restabschnitt (23) des wenigstens einen Klebestreifens (6) zu führen und/oder halten.

13. Vorrichtung nach Anspruch 11 oder 12, wobei die Vorrichtung (1) wenigstens eine Andruckrolle (9, 34) umfasst, mit welcher ein Deckmaterial (4) und/oder wenigstens ein Klebestreifen (6) an die Oberfläche (2) drückbar ist.

14. Vorrichtung nach wenigstens einem der vorhergehenden Ansprüche, wobei wenigstens zwei Aktivierungsvorrichtungen (24, 25) vorgesehen sind, wobei vorzugsweise eine der beiden Aktivierungsvorrichtungen (24, 25) bezogen auf eine Durchlaufrichtung (26) des Werkstücks (3) vor wenigstens einer Andruckrolle (9) und die andere der beiden Aktivierungsvorrichtungen (24, 25) bezogen auf die Durchlaufrichtung (26) des Werkstücks (3) hinter der wenigstens einen Andruckrolle (9) angeordnet ist, wobei die vor der wenigstens einen Andruckrolle (9) angeordnete Aktivierungsvorrichtung (24) dazu ausgebildet ist, die unbeschichtete Oberfläche (2) zu aktivieren, und/oder die hinter der wenigstens einen Andruckrolle (9) angeordnete Aktivierungsvorrichtung (25) dazu ausgebildet ist, die mit dem wenigstens einen Klebestreifen (6) vorbeschichtete Oberfläche (2) zu aktivieren.

15. Verfahren zur Beschichtung einer Oberfläche (2), vorzugsweise einer Schmalfläche, eines, vorzugsweise platten- oder leistenförmigen, Werkstücks (3) mit einem, vorzugsweise streifenförmigen, Deckmaterial (4) mittels einer Vorrichtung nach einem der Ansprüche 1 bis 14, umfassend folgende Verfahrensschritte:
- Herbeiführen einer Relativbewegung zwischen dem Werkstück (3) und wenigstens einer Aktivierungsvorrichtung (24) und
- Abschirmung einer an die zu beschichtende Oberfläche (2) angrenzende, vorzugsweise mit einem Deckmaterial (57) beschichtete, Oberfläche (43), vorzugsweise eine Stirnfläche (58) des Werkstücks (3) und/oder ein Stirnbereich (59) eines Deckmaterials (57) mit welcher die Oberfläche (43) beschichtet ist, von der wenigstens einen Aktivierungsvorrichtung (24) während das Werkstück (3) die wenigstens eine Aktivierungsvorrichtung (24) passiert, oder umgekehrt.

16. Verfahren nach Anspruch 15, wobei eine angrenzende Oberfläche (43), welche in einem Winkel, zwischen 45 und 135 Grad, vorzugsweise zwischen 80 und 100 Grad, besonders bevorzugt in einem Winkel von 90 Grad, zur zu beschichtende Oberfläche (2) angeordnet ist, abgeschirmt wird.

## Claims

1. Device (1) for coating a surface (2), preferably a narrow surface, of a, preferably plate- or strip-shaped, workpiece (3) with a, preferably tape-like, cover material (4), with
- at least one activation device (24) for activating, preferably heating, the surface (2) to be coated,
- at least one conveyor device, preferably having at least one conveyor roller (8), a belt or the like, which is formed to bring about a movement of the workpiece (3) relative to the activation device (24), preferably wherein the workpiece (3) with the surface (2) to be coated can be moved past the at least one activation device (24) by means of the at least one conveyor device,
**characterized in that** at least one shielding device (41) is provided which is movable relative to the at least one activation device (24) and which is formed to shield a surface (43), adjoining the surface (2) to be coated and preferably coated with a cover material (57), preferably an end face (58) of the workpiece (3) and/or an end area (59) of a cover material (57) with which the surface (43) is coated, from the at least one activation device (24) while the workpiece (3) is passing the at least one activation device (24), or vice versa.

2. Device according to claim 1, wherein the at least one shielding device (41) is movable relative to the activation device (24) substantially at the same relative speed at which the workpiece (3) is movable relative to the activation device (24) .

3. Device according to one of the preceding claims, wherein at least one coupling device is provided, with which the at least one shielding device (41), at least while passing the at least one activation device (24), can be coupled to the workpiece (3), and/or wherein at least one drive (46, 47) is provided, with which the at least one shielding device (41) is movable relative to the at least one activation device (24).

4. Device according to at least one of the preceding claims, wherein the at least one shielding device (41) is mounted able to be raised or lowered relative to the workpiece (3).

5. Device according to at least one of the preceding claims, wherein at least one return device is provided, with which the at least one shielding device (41) can be returned to a starting position.

6. Device according to at least one of the preceding claims, wherein at least two shielding devices (41, 42) are provided, with which
- the first surface (43), adjoining the surface (2) to be coated, preferably an end face (58) of the workpiece (3) and/or an end area (59) of a cover material (57) with which the surface (43) is coated, and
- a second surface (44), spaced apart from the first adjoining surface (43), adjoining the surface (2) to be coated and preferably coated with a cover material (57), preferably a further end face (58) of the workpiece (3) and/or an end area (59) of a cover material (57) with which the surface (43) is coated,
can be shielded from the at least one activation device (24).

7. Device according to at least one of the preceding claims, wherein the at least one activation device (24, 25) comprises a heat source, particularly preferably an infrared lamp, laser and/or a hot-air source.

8. Device according to at least one of the preceding claims, wherein the at least one shielding device (41) has at least one cover, wherein the adjoining surface (43) can be shielded, preferably with respect to a heat radiation, by means of the at least one cover.

9. Device according to at least one of the preceding claims, wherein the at least one shielding device (41) has a, preferably pneumatic, pressing device, by means of which the shielding device (41) can be pressed against the adjoining surface (43).

10. Device according to at least one of the preceding claims, wherein the at least one shielding device (41) has a guide device, preferably linear guide (45), in the direction of the relative movement between the workpiece (3) and the activation device (24), preferably wherein the shielding device (41) is, particularly preferably passively, movable along the guide device via the movement of the workpiece (3) relative to the activation device (24).

11. Device according to at least one of the preceding claims, wherein the device (1) has at least one adhesive tape coating device (5), with which the surface (2) can be precoated with at least one adhesive tape (6), and at least one cover material coating device (7), with which the surface (2) precoated with the at least one adhesive tape (6) can be coated with the cover material (4).

12. Device according to claim 11, wherein the at least one adhesive tape feed device (11)
- comprises at least one separating device (18) for cutting through the adhesive tape (6) at a point of separation, preferably wherein the at least one separating device (18) comprises a blade (20) which is movable relative to a fixed counter blade, and/or
- comprises at least one guide and/or holding device (21, 22) for guiding and/or holding the adhesive tape (6), preferably wherein the at least one guide and/or holding device (22) is formed to guide and/or hold a residual portion (23) of the at least one adhesive tape (6) yet to be applied to the surface (2).

13. Device according to claim 11 or 12, wherein the device (1) comprises at least one pressure roller (9, 34), with which a cover material (4) and/or at least one adhesive tape (6) can be pressed onto the surface (2).

14. Device according to at least one of the preceding claims, wherein at least two activation devices (24, 25) are provided, wherein preferably one of the two activation devices (24, 25) is arranged in front of at least one pressure roller (9) with respect to a throughput direction (26) of the workpiece (3) and the other of the two activation devices (24, 25) is arranged behind the at least one pressure roller (9) with respect to the throughput direction (26) of the workpiece (3), wherein the activation device (24) arranged in front of the at least one pressure roller (9) is formed to activate the uncoated surface (2), and/or the activation device (25) arranged behind the at least one pressure roller (9) is formed to activate the surface (2) precoated with the at least one adhesive tape (6).

15. Method for coating a surface (2), preferably a narrow surface, of a, preferably plate- or strip-shaped, workpiece (3) with a, preferably tape-like, cover material (4) by means of a device according to one of claims 1 to 14, comprising the following method steps:
- bringing about a relative movement between the workpiece (3) and at least one activation device (24) and
- shielding a surface (43), adjoining the surface (2) to be coated and preferably coated with a cover material (57), preferably an end face (58) of the workpiece (3) and/or an end area (59) of a cover material (57) with which the surface (43) is coated, from the at least one activation device (24) while the workpiece (3) is passing the at least one activation device (24), or vice versa.

16. Method according to claim 15, wherein an adjoining surface (43), which is arranged at an angle, between 45 and 135 degrees, preferably between 80 and 100 degrees, particularly preferably at an angle of 90 degrees, relative to the surface (2) to be coated, is shielded.

## Revendications

1. Dispositif (1) pour le revêtement d'une surface (2), de préférence d'une surface étroite, d'une pièce (3), de préférence en forme de plaque ou de barre, d'un matériau de recouvrement (4), de préférence en forme de bande, avec
- au moins un dispositif d'activation (24) pour l'activation, de préférence le chauffage, de la surface (2) à revêtir,
- au moins un dispositif de transport, de préférence au moins un rouleau de transport (8), présentant une courroie ou similaire, lequel est réalisé pour provoquer un mouvement relatif de la pièce (3) par rapport au dispositif d'activation (24), de préférence dans lequel la pièce (3) avec la surface (2) à revêtir peut être amenée à passer devant l'au moins un dispositif d'activation (24) au moyen de l'au moins un dispositif de transport,
**caractérisé en ce qu'**au moins un dispositif de protection (41) mobile par rapport à l'au moins un dispositif d'activation (24) est prévu, lequel est réalisé pour protéger une surface (43) adjacente à la surface (2) à revêtir, de préférence une surface frontale (58) de la pièce (3) et/ou une zone frontale (59) d'un matériau de recouvrement (57) duquel la surface (43) est revêtue, de préférence revêtue d'un matériau de recouvrement (57), de l'au moins un dispositif d'activation (24) pendant que la pièce (3) passe par l'au moins un dispositif d'activation (24), ou inversement.

2. Dispositif selon la revendication 1, dans lequel l'au moins un dispositif de protection (41) est mobile par rapport au dispositif d'activation (24) sensiblement avec la même vitesse relative à laquelle la pièce (3) est mobile par rapport au dispositif d'activation (24).

3. Dispositif selon l'une quelconque des revendications précédentes, dans lequel au moins un dispositif d'accouplement est prévu, avec lequel l'au moins un dispositif de protection (41), au moins pendant le passage de l'au moins un dispositif d'activation (24), peut être accouplé à la pièce (3), et/ou dans lequel au moins un entraînement (46, 47) est prévu, avec lequel l'au moins un dispositif de protection (41) est mobile par rapport à l'au moins un dispositif d'activation (24) .

4. Dispositif selon au moins l'une des revendications précédentes, dans lequel l'au moins un dispositif de protection (41) est monté de manière à pouvoir être levé ou baissé par rapport à la pièce (3).

5. Dispositif selon au moins l'une des revendications précédentes, dans lequel au moins un dispositif de renvoi est prévu, avec lequel l'au moins un dispositif de protection (41) peut être renvoyé dans une position de départ.

6. Dispositif selon au moins l'une des revendications précédentes, dans lequel au moins deux dispositifs de protection (41, 42) sont prévus, avec lesquels
- la première surface (43) adjacente à la surface (2) à revêtir, de préférence une surface frontale (58) de la pièce (3) et/ou une zone frontale (59) d'un matériau de recouvrement (57) duquel la surface (43) est revêtue, et
- une deuxième surface (44) adjacente à la surface (2) à revêtir, de préférence revêtue d'un matériau de recouvrement (57), de préférence une autre surface frontale (58) de la pièce (3) et/ou une zone frontale (59) d'un matériau de recouvrement (57) duquel la surface (43) est revêtue,
peut être protégée de l'au moins un dispositif d'activation (24) .

7. Dispositif selon au moins l'une des revendications précédentes, dans lequel l'au moins un dispositif d'activation (24, 25) comprend une source de chaleur, de manière particulièrement préférée un émetteur de rayons infrarouges, laser et/ou une source d'air chaud.

8. Dispositif selon au moins l'une des revendications précédentes, dans lequel l'au moins un dispositif de protection (41) présente au moins un couvercle, dans lequel la surface (43) adjacente peut être protégée au moyen de l'au moins un couvercle, de préférence vis-à-vis d'un rayonnement thermique.

9. Dispositif selon au moins l'une des revendications précédentes, dans lequel l'au moins un dispositif de protection (41) présente un dispositif de pressage, de préférence pneumatique, au moyen duquel le dispositif de protection (41) peut être pressé de manière adjacente sur la surface (43).

10. Dispositif selon au moins l'une des revendications précédentes, dans lequel l'au moins un dispositif de protection (41) présente un dispositif de guidage, de préférence guidage linéaire (45), en direction du mouvement relatif entre la pièce (3) et le dispositif d'activation (24), de préférence dans lequel le dispositif de protection (41) est mobile, de manière particulièrement préférée de manière passive, par l'intermédiaire du mouvement relatif de la pièce (3) par rapport au dispositif d'activation (24) le long du dispositif de guidage.

11. Dispositif selon au moins l'une des revendications précédentes, dans lequel le dispositif (1) présente au moins un dispositif de revêtement de bande adhésive (5), avec lequel la surface (2) peut être pré-revêtue d'au moins une bande adhésive (6), et au moins un dispositif de revêtement de matériau de recouvrement (7), avec lequel la surface (2) pré-revêtue de l'au moins une bande adhésive (6) peut être revêtue du matériau de recouvrement (4).

12. Dispositif selon la revendication 11, dans lequel l'au moins un dispositif d'amenée de bande adhésive (11)
- comprend au moins un dispositif de sectionnement (18) pour sectionner la bande adhésive (6) sur un point de sectionnement, de préférence dans lequel l'au moins un dispositif de sectionnement (18) comprend une lame (20) mobile par rapport à une contre-lame fixe, et/ou
- comprend au moins un dispositif de guidage et/ou de retenue (21, 22) pour guider et/ou retenir la bande adhésive (6), de préférence dans lequel l'au moins un dispositif de guidage et/ou de retenue (22) est réalisé pour guider et/ou retenir une partie résiduelle (23) de l'au moins une bande adhésive (6) encore à appliquer sur la surface (2).

13. Dispositif selon la revendication 11 ou 12, dans lequel le dispositif (1) comprend au moins un rouleau de pression (9, 34), avec lequel un matériau de recouvrement (4) et/ou l'au moins une bande adhésive (6) peut être pressé (e) sur la surface (2).

14. Dispositif selon au moins l'une des revendications précédentes, dans lequel au moins deux dispositifs d'activation (24, 25) sont prévus, dans lequel de préférence un des deux dispositifs d'activation (24, 25) est disposé par rapport à une direction de passage (26) de la pièce (3) devant au moins un rouleau de pression (9) et l'autre des dispositifs d'activation (24, 25) par rapport à la direction de passage (26) de la pièce (3) derrière l'au moins un rouleau de pression (9), dans lequel le dispositif d'activation (24) disposé devant l'au moins un rouleau de pression (9) est réalisé pour activer la surface (2) non revêtue, et/ou le dispositif d'activation (25) disposé derrière l'au moins un rouleau de pression (9) est réalisé pour activer la surface (2) pré-revêtue de l'au moins une bande adhésive (6).

15. Procédé pour le revêtement d'une surface (2), de préférence d'une surface étroite, d'une pièce (3), de préférence en forme de plaque ou de barre, d'un matériau de recouvrement (4), de préférence en forme de bande, au moyen d'un dispositif selon l'une quelconque des revendications 1 à 14, comprenant les étapes de procédé suivantes :
- le fait de provoquer un mouvement relatif entre la pièce (3) et au moins un dispositif d'activation (24) et
- la protection d'une surface (43) adjacente à la surface (2) à revêtir, de préférence revêtue d'un matériau de recouvrement (57), de préférence une surface frontale (58) de la pièce (3) et/ou une zone frontale (59) d'un matériau de recouvrement (57) duquel la surface (43) est revêtue, de l'au moins un dispositif d'activation (24) pendant que la pièce (3) passe par l'au moins un dispositif d'activation (24), ou inversement.

16. Procédé selon la revendication 15, dans lequel une surface (43) adjacente, laquelle est disposée à un angle, compris entre 45 et 135 degrés, de préférence entre 80 et 100 degrés, de manière particulièrement préférée à un angle de 90 degrés, par rapport à la surface (2) à revêtir, est protégée.
